# EUROPÄISCHE PATENTSCHRIFT

(11) **EP 3 548 975 B1**
(45) Veröffentlichungstag und Bekanntmachung des Hinweises auf die Patenterteilung: **29.04.2020**
(21) Anmeldenummer: 17801720.8
(22) Anmeldetag: 23.11.2017
(51) Int. Cl.: G05B 19/042

(54) **STEUERUNG EINES TECHNISCHEN PROZESSES AUF EINER MEHR-RECHENKERN-ANLAGE**
CONTROL OF A TECHNICAL PROCESS ON A MULTI COMPUTING CORE INSTALLATION
COMMANDE D'UN PROCESSUS TECHNIQUE AVEC UNE INSTALLATION À PLUSIEURS NOYAUX DE CALCUL

(30) Priorität: 13.01.2017 DE 102017100655
(43) Veröffentlichungstag der Anmeldung: 09.10.2019
(73) Patentinhaber: Beckhoff Automation GmbH, 33415 Verl (DE)
(72) Erfinder: JANSSEN, Dirk, 33415 Verl (DE); KÜMMEL, Richard, 33605 Bielefeld (DE); BETTENWORTH, Manuel, 33335 Gütersloh (DE); ZABEL, Henning, 32429 Minden (DE); ACHTERBERG, Jan, 47249 Duisburg (DE)
(74) Vertreter: Patentanwaltskanzlei WILHELM & BECK
(86) Internationale Anmeldenummer: PCT/EP2017/080165
(87) Internationale Veröffentlichungsnummer: WO 2018/130331

(56) Entgegenhaltungen:
- WO-A1-2012/027907
- DE-A1-102009 047 024
- DE-B4-102006 052 757

## Beschreibung

Die Erfindung betrifft ein Verfahren zum Steuern eines technischen Prozesses, der eine Steuerungsaufgabe für eine Anzahl von eigenständig steuerbaren Modulen umfasst, auf einer Steuerung, die eine Mehrzahl von Rechenkernen umfasst, wobei der technische Prozess mit der Steuerung wenigstens eine Kommunikationsverbindung zum Datenaustausch aufweist. Die Erfindung betrifft weiter eine entsprechende Steuerung für den technischen Prozess und ein Antriebssystem mit einer solchen Steuerung.

Die Steuerung von technischen Prozessen erfolgt in der Regel mit Hilfe von speicherprogrammierbaren Steuerungen SPS. Dabei wird üblicherweise eine Rechenanlage verwendet, um ein Steuerprogramm mit einzelnen Steuerungsaufgaben auszuführen, welches die Zustände des technischen Prozesses abfragt, um auf der Basis der bestimmten Zustände dann den technischen Prozess zu steuern. Die einzelnen Steuerungsaufgaben des Steuerprogramms werden dabei in der Regel zyklisch innerhalb eines festen Zeitrahmens ausgeführt. Komplexe technische Prozesse können aber eine Vielzahl von eigenständig steuerbaren Modulen umfassen und hohe Anforderungen an die Leistungsfähigkeit der Rechenanlage stellen.

Bis zu einem gewissen Grad kann den gesteigerten Anforderungen an die Steuerung mit einer höher getakteten Rechenanlage begegnet werden. Aufgrund von physikalischen Gegebenheiten lässt sich diese Art der Leistungssteigerung jedoch nicht beliebig fortführen. Eine weitere Möglichkeit ist der Einsatz von Rechenanlagen, die mehrere parallel arbeitende Rechenkerne aufweisen. Die Verteilung von Steuerungsaufgaben durch Zuweisung auf verschiedene Rechenkerne erhöht die verfügbare Rechenzeit innerhalb einer festen Zeitspanne. Weiterhin können auch einzelne Steuerungsaufgaben in unabhängige Unteraufgaben zerlegt und parallel auf verschiedenen Rechenkernen ausgeführt werden.

Parallelisierte Steuerungsprogramme werden in der industriellen Automatisierung jedoch bisher kaum eingesetzt. Die Steuerungsprogramme sind weitgehend für die Ausführung auf einem Rechenkern konzipiert und sind nicht auf eine parallele Verarbeitung ausgerichtet. Setzen Automatisierungssysteme Mehr-Rechenkern-Anlagen ein, beschränkt sich die parallele Verarbeitung in der Regel auf die Zuordnung von einzelnen Steuerungsaufgaben auf die verfügbaren Rechenkerne. Ein Steuerung für einen technischen Prozess mit einer Mehrzahl von Rechenkernen, denen jeweils ein Steuerungsaufgabe des technischen Prozesses zugeordnet ist, ist beispielsweise aus der DE 10 2006 052 757 B4 bekannt. Ein Verfahren mit den Merkmalen des Oberbegriffs des Anspruchs 1 und eine Steuerung mit den Merkmalen des Oberbegriffs des Anspruchs 8 ist in der DE 10 2009 047 024 A1 beschrieben. Ein solches Konzept der Parallelisierung stößt aber an seine Grenzen, wenn die benötigte Rechenzeit für eine einzelne Steuerungsaufgabe über die festgelegte Zykluszeit hinausgeht. In diesem Fall kann eine Reduzierung der Rechenzeit dadurch erreicht werden, dass die Berechnungen innerhalb der Steuerungsaufgabe selbst auf die vorhandenen Rechenkerne verteilt werden. Diese Parallelisierung erfordert aber in der Regel einen aufwändigen Neuentwurf der Implementierung der Steuerungsaufgabe.

Aufgabe der vorliegenden Erfindung ist es, einen technischen Prozess, der eine Steuerungsaufgabe für eine Anzahl von eigenständig steuerbaren Modulen umfasst, auf einer Steuerung, die eine Mehrzahl von Rechenkernen umfasst, so auszuführen, dass ohne einen aufwändigen Neuentwurf die Gesamtbearbeitungszeit reduziert und kürzere Zykluszeiten ermöglicht werden.

Diese Aufgabe wird durch ein Verfahren zum Steuern eines technischen Prozesses gemäß Anspruch 1, einer Steuerung gemäß Anspruch 8 und einem Antriebssystem gemäß Anspruch 15 gelöst. Weitere vorteilhafte Ausführungen sind jeweils in den abhängigen Ansprüchen angegeben.

Zum Steuern eines technischen Prozesses, der eine Steuerungsaufgabe für eine Anzahl von eigenständig steuerbaren Modulen umfasst, werden die Modulen jeweils einem Rechenkern auf einer Steuerung, die eine Mehrzahl von Rechenkernen umfasst, zugeordnet. Der technische Prozess ist mit der Steuerung wenigstens über eine Kommunikationsverbindung zum Datenaustausch verbunden. In einem Steuerungszyklus stellt die Steuerung über wenigstens eine E/A-Einheit der Steuerung eingelesene Eingangsdaten der Module für den jeweils zugeordneten Rechenkern in einem ersten Zeitabschnitt bereit. Anschließend erfolgt durch die Steuerung ein Synchronisieren der Rechenkerne, denen Module zugeordnet sind. Die Rechenkerne verarbeiten dann die Eingangsdaten der Module, die den jeweiligen Rechenkern zugeordneten sind, in einem zweiten Zeitabschnitt, um Ausgangsdaten für die Module zu erzeugen, wobei jeder Rechenkern das Ende der Verarbeitung signalisiert. Wenn alle Rechenkerne das Ende der Verarbeitung signalisiert haben, werden die Ausgangsdaten für die Module durch die Steuerung in einem dritten Zeitabschnitt bereitgestellt, um dann über die E/A-Einheit auf der Kommunikationsverbindung an die Module verschickt zu werden.

Die Parallelisierung der Steuerungsaufgabe eines technischen Prozesses mit einer variablen Anzahl von eigenständig steuerbaren Modulen sieht vor, die Berechnung zur Steuerung der Module während der Konfigurationsphase individuell auf die verfügbaren Rechenkerne zu verteilen. Dem Anwender obliegt dann lediglich zu entscheiden, auf wie vielen bzw. auf welchen Rechenkernen die Steuerungsaufgabe parallel ausgeführt werden soll. Die flexible Verteilung ermöglicht bei komplexen technischen Prozessen die Gesamtrechenzeit für die Steuerung deutlich zu verringern.

Wenigstens einer der Vorgänge Bereitstellen der Eingangsdaten, Verarbeiten der Eingangsdaten zu den Ausgangsdaten und Bereitstellen der Ausgangsdaten kann in wenigstens zwei Abschnitte unterteilt sein, den jeweils eine Bearbeitungsvorgang, im Weiteren auch Task bezeichnet, zugeordnet ist, wobei zwischen den zwei Abschnitten eine Synchronisation ausgeführt wird. Mit einem solchen Ablauf kann die Parallelisierung bei der Bereitstellung der Eingangsdaten bzw. der Ausgangsdaten sowie die Abarbeitung von Steuerungsroutinen weiter erhöht und damit die Gesamtrechenzeit des Steuerungszyklus zusätzlich verkürzt werden.

Die Eingangsdaten der Module werden dem jeweils zugeordneten Rechenkern in einem zugeordneten Speicherbereich zur Verfügung gestellt. Die Rechenkerne können dann die ihnen jeweils zugewiesenen Tasks bzw. Routinen abarbeiten, ohne sich gegenseitig zu behindern bzw. auszubremsen. Es können sich aber auch mehrere Rechenkerne einen Speicherbereich teilen. Die Eingangsdaten der Module können den Rechenkernen grundsätzlich in einem gemeinsamen Speicherbereich zur Verfügung gestellt werden. Hierdurch wird ein schneller Datenaustausch in der Steuerung gewährleistet.

In einer Initialisierungsphase erfasst ein Rechenkern die eigenständig steuerbaren Module, wobei die erfassten Module jeweils einem Rechenkern nach wenigstens einem vorgegebenen Kriterium zuordnet werden. Mit dieser Vorgehensweise wird ein flexibles Parallelisierungskonzept, das sich schnell an die Anforderungen des technischen Prozesses anpassen lässt, ermöglicht.

Eigenständig steuerbare Module mit besonderen Sicherheitsanforderungen werden auf verschiedene Rechenkerne verteilt, wodurch auf einfache Weise für den technischen Prozess vorgegebene Sicherheitskriterien eingehalten werden können.

Der technische Prozess weist mit der Steuerung eine Mehrzahl von Kommunikationsverbindungen zum Datenaustausch auf, wobei die Steuerung eine Mehrzahl von E/A-Einheiten umfasst, die jeweils ausgelegt sind, über eine zugeordnete Kommunikationsverbindung mit dem technischen Prozess Daten auszutauschen. Jeder E/A-Einheit ist dann ein Rechenkern zugeordnet, der ausgelegt ist, das Bereitstellen der Eingangs- und der Ausgangsdaten für die jeweils zugeordnete E/A-Einheit auszuführen. Mit dieser Vorgehensweise lassen sich auch die der eigentlichen Berechnung vor- bzw. nachgeschalteten Vorgänge im Steuerungszyklus parallelisieren, was sehr kurze Zykluszeiten ermöglicht.

Der technische Prozess umfasst eine Bewegungssteuerung der eigenständig steuerbaren Module, wobei die Steuerung ausgelegt ist, die Bewegungssteuerung der eigenständig steuerbaren Module auszuführen.

Ein Antriebssystem umfasst eine Mehrzahl von Motormodulen, die jeweils einen Verfahrweg und eine Mehrzahl von längs des Verfahrwegs angeordneten, eigenständig bestrombaren Antriebsspulen aufweisen. Die Antriebselemente des Antriebssystems, die die eigenständig steuerbaren Module darstellen, weisen jeweils eine Magneteinrichtung auf, um durch die Antriebsspulen bewegt zu werden. Eine Anzahl von Motormodulen aus der Mehrzahl von Motormodulen dient dabei als Einspeisemodule für die Mehrzahl von Motormodulen, wobei die Einspeisemodule jeweils über eine Kommunikationsleitung an die Steuerung angeschlossen sind.

Ein E/A-Einheit der Steuerung ist ausgelegt, über mehrere Kommunikationswege Daten mit den Einspeisemodulen auszutauschen.

Im Folgenden wird die Erfindung mit Bezug auf die beigefügten Zeichnungen näher erläutert.
Fig. 1 zeigt schematisch einen erfindungsgemäßen Steuerungszyklus zum Ausführen einer Steuerungsaufgabe für eine Mehrzahl von eigenständig steuerbaren Modulen eines technischen Prozesses auf einer Steuerung mit drei Rechenkernen, wobei die Steuerung eine Kommunikationsverbindung zum Datenaustausch mit dem technischen Prozess aufweist.
Fig. 2 zeigt schematisch den erfindungsgemäßen Steuerungszyklus gemäß Fig. 1, wobei die Steuerung zwei Kommunikationsverbindungen zum Datenaustausch mit dem technischen Prozess aufweist.
Fig. 3 zeigt schematisch den erfindungsgemäßen Steuerungszyklus gemäß Fig. 1, wobei die Steuerung drei Kommunikationsverbindungen zum Datenaustausch mit dem technischen Prozess aufweist.
Fig. 4 zeigt schematisch den erfindungsgemäßen Steuerungszyklus gemäß Fig. 1, wobei die Steuerung drei Kommunikationsverbindungen zum Datenaustausch mit dem technischen Prozess aufweist und eine Mehrzahl von Synchronisierungseinheiten vorgesehen sind.
Fig. 5 zeigt eine Bewegungssteuerung von acht eigenständig steuerbaren Antriebselementen mit dem erfindungsgemäßen Steuerungskonzept, wobei die Steuerungsaufgabe von einer Steuerung mit einer E/A-Einheit und drei Rechenkernen ausgeführt wird.
Fig. 6 zeigt eine Bewegungssteuerung mit dem erfindungsgemäßen Steuerungskonzept bei einem linearen Transportsystem, das zehn Motormodule und vier Transportelemente aufweist, wobei zwei Motormodule Einspeisemodule darstellen und die Steuerungsaufgabe von einer Steuerung mit einer E/A-Einheit und drei Rechenkernen ausgeführt wird.
Fig. 7 zeigt eine Bewegungssteuerung mit dem erfindungsgemäßen Steuerungskonzept bei einem Sechs-Achsen-Robotersystem, wobei die Steuerungsaufgabe auf einer Steuerung mit zwei E/A-Einheiten und drei Rechenkernen ausgeführt wird.

In der Industrieautomation werden zunehmend komplexere und intelligentere Produktionsplattformen eingesetzt, die eine immer größere Rechenleistung notwendig machen und deshalb den Einsatz einer leistungsfähigen Steuerung erfordern. Steuerungsaufgaben von technischen Prozessen, insbesondere solche zur Bewegungssteuerung einer großen Anzahl von eigenständig steuerbaren Modulen, zeichnen sich oft durch sehr kurze Zykluszeiten auf, die hoch präzise durchlaufen werden müssen, um geforderten Echtzeitbedingungen einhalten zu können. Dabei müssen zwischen dem technischen Prozess und der Steuerung häufig auch große Mengen an Ein- und Ausgabedaten ausgetauscht werden. Im Rahmen der Bewegungssteuerung sind weiterhin meistens sehr rechenzeitaufwändige Funktionalitäten, wie Regelungsalgorithmen, Sollwertgeneration oder Koordinatentransformation, auszuführen.

Hohe Rechenleistungen lassen sich insbesondere mit Steuerungen erzielen, bei denen gleichzeitig mehrere Rechenkerne genutzt werden. Im Folgenden wird ein Konzept zur Parallelisierung von Steuerungsaufgaben eines technischen Prozesses mit einer variablen Anzahl von eigenständigen steuerbaren Modulen erläutert, bei dem die im Rahmen der Steuerungsaufgaben auszuführenden Berechnungen auf die verfügbaren Rechenkerne der Steuerung verteilt sind. Das Konzept ermöglicht eine Parallelisierung von Steuerungsaufgaben, so dass keine spezielle Programmierung der Steuerungsaufgaben zum verteilten Ausführen auf den einzelnen Rechenkerne erforderlich ist. Der Anwender muss nur in einer Konfigurations- und Initialisierungsphase entscheiden, auf wie viele bzw. auf welche Rechenkerne die Steuerungsaufgabe verteilt werden soll, d.h. wie die Zuordnung zwischen den eigenständig steuerbaren Modulen und den Rechenkernen erfolgen soll. Die flexible Verteilung der Steuerungsaufgabe auf eine Anzahl von eigenständig steuerbaren Modulen ermöglicht die Rechenzeit der Steuerung und damit die Zykluszeit der Steuerungsaufgabe zu verkürzen.

Das Konzept zur Parallelisierung einer Steuerungsaufgabe für eine Anzahl von eigenständig steuerbaren Modulen eines technischen Prozesses sieht vor, dass die Module jeweils einem Rechenkern auf einer Steuerung, die eine Mehrzahl von Rechenkernen umfasst, zugeordnet werden. Der technische Prozess mit der Anzahl von eigenständig steuerbaren Modulen ist mit der Steuerung dabei über wenigstens eine Kommunikationsverbindung zum Datenaustausch verbunden. Der Steuerungszyklus wird in drei Zeitabschnitte unterteilt. Im ersten Zeitabschnitt des Steuerungszyklus werden die Eingangsdaten der Module, die über wenigstens eine E/A-Einheit der Steuerung eingelesen werden, die an die Kommunikationsverbindung angeschlossen ist, von der Steuerung für die Rechenkerne bereitgestellt. Mit dem Bereitstellen der Eingangsdaten für alle Rechenkerne endet der erste Zeitabschnitt.

Der zweite Zeitabschnitt des Steuerungszyklus beginnt mit dem gleichzeitigen Freigeben der Rechenkerne, denen Eingangsdaten von Modulen zugeordnet sind, nachdem alle Eingangsdaten bereitstehen. Dies könnten beispielweise alle Rechenkerne oder eine Teilmenge aller Rechenkerne sein. Im zweiten Zeitabschnitt verarbeiten die Rechenkerne dann die Eingangsdaten der Module, die dem jeweiligen Rechenkern zugeordnet sind, um Ausgangsdaten für die Module zu erzeugen, wobei jeder Rechenkern das Ende der Verarbeitung signalisiert. Sobald alle Rechenkerne das Ende der Verarbeitung signalisiert haben, ist der zweite Zeitabschnitt des Steuerungszyklus beendet.

Im sich daran anschließenden dritten Zeitabschnitt des Steuerungszyklus werden die Ausgangsdaten für die Module durch die Steuerung bereitgestellt, um über die E/A-Einheit der Steuerung auf die Kommunikationsverbindung ausgegeben und an die Module verschickt zu werden. Dann ist der Steuerungszyklus beendet.

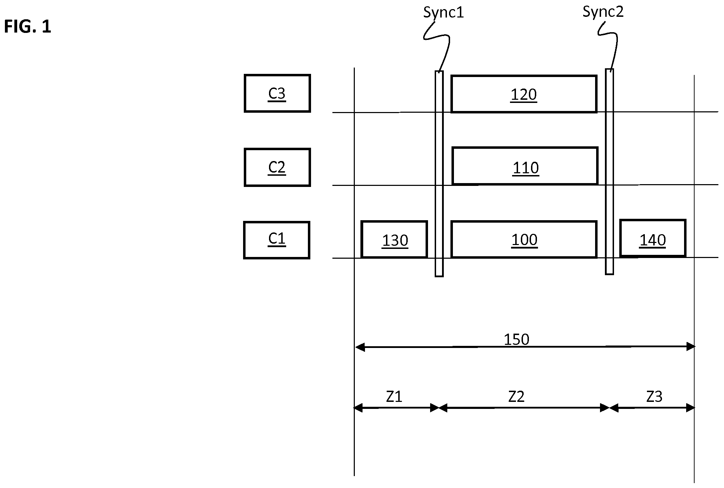

In Fig. 1 ist dieser prinzipielle Ablauf zur Steuerung eines technischen Prozesses mit einer Mehrzahl an eigenständig steuerbaren Modulen gezeigt, wobei die Module hier nicht dargestellt sind. Beispielhaft wird die Erfindung im Folgenden für eine Anzahl von dreißig eigenständig steuerbaren Modulen beschrieben. Die Steuerung weist drei Rechenkerne C1, C2, C3 auf, die jeweils eine Steuerungsroutine ausführen. Unter einer Steuerungsroutine ist die Verarbeitung/Berechnung von Eingangsdaten zu Ausgangsdaten mittels zumindest eines Algorithmus zu verstehen.

Die Steuerungsroutinen 100, 110, 120 für die 30 Module werden bei der Konfiguration auf die drei Rechenkerne C1, C2, C3 verteilt, wobei in der gezeigten Ausführung eine Gleichverteilung ausgeführt ist, d.h. jeder Rechenkern C1, C2, C3 ist für zehn Module zuständig. Somit sind dem ersten Rechenkern C1 die zehn Steuerungsroutinen 100 für die ersten 10 Module zugeordnet. Dem zweiten Rechenkern C2 sind die zehn Steuerungsroutinen 110 der zweiten 10 Module zugeordnet und dem dritten Rechenkern C3 sind die zehn Steuerungsroutinen 120 der letzten 10 Module zugeordnet. Um dem Anwender der Steuerungsaufgabe die Zuordnung der eigenständig steuerbaren Module zu den Rechenkernen C1, C2, C3 zu erleichtern, kann in einer Initialisierungsphase ein Rechenkern C1 die Anzahl und funktionale Ausprägung der eigenständig steuerbaren Module des technischen Prozesses erfassen.

Eine Gleichverteilung der Steuerungsroutinen 100, 110, 120 der eigenständig steuerbaren Module auf die Rechenkerne C1, C2, C3 ist jedoch nicht zwingend, insbesondere dann, wenn beispielsweise die eigenständig steuerbaren Module des technischen Prozesses verschiedenen Funktionalitäten zugeordnet sind, so dass die erforderlichen Rechenleistungen für die Steuerungsroutinen 100, 110, 120 unterschiedlich groß sind. Die Zuordnung der Steuerungsroutinen 100, 110, 120 der Module zu den Rechenkernen C1, C2, C3 kann dann so erfolgen, dass die den jeweiligen Rechenkernen C1, C2, C3 zugeordnete Rechenlast im Wesentlichen gleich ist und sich dann eine im Wesentlichen gleich lange Berechnungszeit für die Rechenkerne C1, C2, C3 ergibt.

Grundsätzlich besteht die Möglichkeit, dass die Zuordnung der Steuerungsroutinen 100, 110, 120 der Module zu den einzelnen Rechenkernen C1, C2, C3 nach einem beliebig vorgegebenen Kriterium erfolgen kann. Ein Kriterium für die Zuordnung kann wie erläutert sein, die Auslastung der Rechenkerne C1, C2, C3 gleichmäßig zu gestalten, um im Wesentlichen eine gleich lange Rechenzeit für alle Rechenkerne C1, C2, C3 zu erreichen, um so die Gesamtrechenzeit für die Steuerungsaufgabe zu minimieren. Wenn einzelne Module des technischen Prozesses spezielle Anforderungen erfüllen müssen, kann ein weiteres Kriterium bei der Zuordnung der Steuerungsroutinen 100, 110, 120 der eigenständig steuerbaren Module zu den Rechenkernen C1, C2, C3 sein, dass die Steuerungsroutinen 100, 110, 120 dieser besonderen Module auf verschiedene Rechenkerne C1, C2, C3 verteilt werden.

Dies kann insbesondere dann vorteilhaft sein, wenn Module mit besonderen Sicherheitsanforderungen für den technischen Prozess vorgesehen sind. Die Sicherheitskriterien für den technischen Prozess können beispielsweise dadurch gewährleistet werden, dass die Steuerungsroutinen 100, 110, 120 der Module mit den speziellen Sicherheitsanforderungen verschiedenen Rechenkernen C1, C2, C3 zugeordnet werden. Auch besteht die Möglichkeit, die Steuerungsroutinen 100, 110, 120 von Modulen, die spezielle Sicherheitsforderungen erfüllen müssen, parallel auf mehreren Rechenkernen C1, C2, C3 ausführen, um Fehler bei der Steuerung zu aufzudecken und dann zu verhindern.

Bei dem in Fig. 1 gezeigten Ablauf werden der erste Zeitabschnitt Z1 und der dritte Zeitabschnitt Z3 des Steuerungszyklus 150, d.h. das Einlesen der Eingangsdaten 130 der Module über die E/A-Einheit und das Bereitstellen der Eingangsdaten 130 für den jeweiligen zugeordneten Rechenkern C1, C2, C3 bzw. das Bereitstellen der Ausgangsdaten 140 für die Module, nachdem alle Rechenkerne C1, C1, C3 das Ende der Verarbeitung der Steuerungsroutinen 100, 110, 120 signalisiert haben, und das Ausgeben der Ausgangsdaten 140 über die E/A-Einheit von einem Rechenkern, bei der in Fig. 1 gezeigten Darstellung vom ersten Rechenkern C1 ausgeführt. Mit dieser Vorgehensweise besteht die Möglichkeit, die Hardware der Steuerung optimal auszunutzen. Es müssen dann keine zusätzlichen Einheiten vorgesehen sein, die den ersten Zeitabschnitt Z1 bzw. dritten Zeitabschnitt Z3 des Steuerungszyklus 150 abarbeiten.

Zwischen dem ersten Zeitabschnitt Z1 und dem zweiten Zeitabschnitt Z2 des Steuerungszyklus 150 und dem zweiten Zeitabschnitt Z2 und dem dritten Zeitabschnitt Z3 des Steuerungszyklus 150 wird, wie Fig. 1 gezeigt, jeweils eine Synchronisierung Sync1, Sync2 durchgeführt. Die Synchronisierungen Sync1, Sync2 können dabei auf einer eigenständigen Synchronisierungseinheit, die in einer Kontrolleinheit der Steuerung enthalten ist, ablaufen. Es besteht jedoch auch die Möglichkeit, dass die Synchronisierungen Sync1, Sync2 von einem Rechenkern C1, C2, C3 bzw. von allen Rechenkernen C1, C2, C3 gemeinsam als Programmbestandteil der Steuerungsaufgabe ausgeführt werden.

Während einer Initialisierungsphase erfasst die Synchronisierungseinheit die Anzahl aller am Prozess beteiligten bzw. zur Verfügung stehenden Rechenkerne C1, C2, C3. Alternativ kann der Synchronisierungseinheit die Anzahl auch seitens der Steuerung oder einer anderen Einheit mitgeteilt werden.

Zur Synchronisierung Sync1, Sync2 melden sich die einzelnen Rechenkerne C1, C2, C3 bei der Synchronisierungseinheit an. Dies erfolgt direkt nachdem der jeweilige Rechenkern C1, C2, C3 die ihm zugewiesene Task erledigt hat oder dem jeweiligen Rechenkern C1, C2, C3 keine Task zugewiesen wurde. Dann wird seitens der Synchronisierungseinheit festgestellt, ob die bei der Initialisierungsphase festgelegte Anzahl von Rechenkernen C1, C2, C3 angemeldet ist. Wenn nicht, wird der sich anmeldende Rechenkern C1, C2, C3 in einen Wartemodus versetzt. Sobald sich der letzte Rechenkern C1, C2, C3 bei der Synchronisierungseinheit anmeldet und somit die festgelegte Anzahl von Rechenkernen C1, C2, C3 erreicht wird, werden alle bisher in den Wartemodus versetzten Rechenkerne C1, C2, C3 wieder in den aktiven Modus versetzt. Die Rechenkerne C1, C2, C3 beginnen dann mit der nächsten zugewiesenen Task.

Beim ersten Synchronisierungsschritt Sync1 zwischen dem ersten Zeitabschnitt Z1 und dem zweiten Zeitabschnitt Z2 des Steuerungszyklus 150 erfolgt der Ablauf gemäß Figur 1 dann derart, dass sich der zweite Rechenkern C2 und der dritte Rechenkern C3 direkt bei der Synchronisierungseinheit anmelden. Die Synchronisierungseinheit, der aus der Initialisierungsphase bekannt ist, dass drei Rechenkerne C1, C2, C3 an dem Prozess beteiligt sind, stellt dann fest, dass sich aktuell nur zwei Rechenkerne C2, C3 angemeldet haben und versetzt die beiden Rechenkerne C2, C3 deshalb in den Wartemodus. Sobald der erste Rechenkern C1 die Eingangsdaten 130 der Module bereitgestellt und somit seine diesbezügliche Task erledigt hat, meldet sich der erste Rechenkern C1 ebenfalls bei der Synchronisierungseinheit an. Die Synchronisierungseinheit stellt nun fest, dass sich alle Rechenkerne C1, C2, C3 angemeldet haben und versetzt den zweiten Rechenkern C2 und den dritten Rechenkern C3 wieder in den aktiven Modus. Die drei aktiven Rechenkerne C1, C2, C3 können dann die ihnen jeweils zugewiesene Task im zweiten Zeitabschnitt Z2 abarbeiten.

Beim zweiten Synchronisierungsschritt Sync2 zwischen dem zweiten Zeitabschnitt Z2 und dem dritten Zeitabschnitt Z3 des Steuerungszyklus 150 erfolgt der Ablauf gemäß Figur 1 dann derart, dass sich die jeweiligen Rechenkerne C1, C2, C3 jeweils direkt nach Abarbeitung ihrer jeweils zugewiesenen Task bei der Synchronisierungseinheit anmelden. Die Synchronisierungseinheit stellt fest, ob sich aktuell schon alle drei am Prozess beteiligten Rechenkerne C1, C2, C3 angemeldet haben, wobei der Synchronisierungseinheit aus der Initialisierungsphase bekannt ist, dass drei Rechenkerne C1, C2, C3 an dem Prozess beteiligt sind. Solange sich nicht die Anzahl von drei angemeldeten Rechenkernen C1, C2, C3 erreicht ist, versetzt die Synchronisierungseinheit die sich anmeldenden Rechenkerne C1, C2, C3 in den Wartemodus. Sobald der letzte der drei Rechenkerne C1, C2, C3 mit der Abarbeitung der ihm zugewiesenen Steuerungsroutinen fertig ist, meldet sich dieser Rechenkern C1, C2, C3 ebenfalls bei der Synchronisierungseinheit an. Diese stellt nun fest, dass sich alle Rechenkerne C1, C2, C3 angemeldet haben und versetzt die anderen beiden Rechenkerne C1, C2, C3 wieder in den aktiven Modus.

Dem jeweils zugeordneten Rechenkern C1, C2, C3 werden die Eingangsdaten 130 der Module in einem dem jeweiligen Rechenkern C1, C2, C3 zugeordneten Speicherbereich in der Steuerung zur Verfügung gestellt. Die Rechenkerne C1, C2, C3 können dann die ihnen jeweils zugewiesene Task bzw. Routine insbesondere im zweiten Zeitabschnitt Z2 abarbeiten, ohne sich gegenseitig zu behindern bzw. auszubremsen. Der Speicher der Steuerung kann auch so ausgelegt sein, dass sich mehrere Rechenkerne C1, C2, C3 einen Speicherbereich teilen. Dies ist insbesondere dann vorteilhaft, wenn die Rechenkerne C1, C2, C3 auf gemeinsame Eingangsdaten 130 zugreifen.

Bei dem in Fig. 1 gezeigten Ablauf erfolgt das Einlesen der Eingangsdaten 130 der Module über die E/A-Einheit der Steuerung und das Bereitstellen der Eingangsdaten 130 in dem, dem jeweiligen Rechenkern C1, C2, C3 zugeordneten Speicherbereich durch den ersten Rechenkern C1, der dazu in den aktiven Modus versetzt wird.

Das Bereitstellen der Ausgangsdaten 140 für die Module und Ausgeben der Ausgangsdaten 140 über die E/A-Einheit der Steuerung erfolgt bei dem in Fig. 1 gezeigten Ablauf wiederum durch den ersten Rechenkern C1. Der erste Rechenkern C1 wird dazu in den aktiven Modus versetzt, um die Ausgangsdaten 140, die die Rechenkerne C1, C2, C3 in den zugeordneten Speicherbereichen bereitgestellt haben, aufzubereiten. Im Rahmen dieser Bereitstellung kann der erste Rechenkern C1 dann auch eine Nachbearbeitung der Ausgangsdaten 140 für die Module ausführen, z.B. eine Skalierung oder eine einfache Koordinatentransformation.

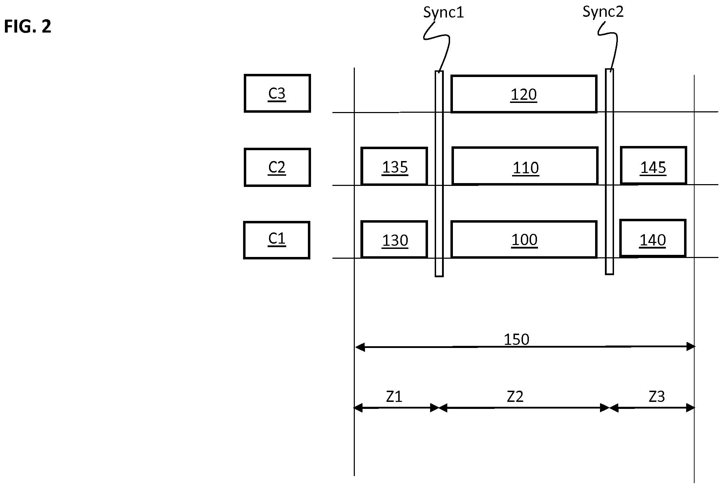

Fig. 2 zeigt eine mögliche Abwandlung des Ablaufes gemäß Fig. 1. Beim Ablauf gemäß Fig. 2 sind zwischen der Steuerung und dem technischen Prozess zwei Kommunikationsverbindungen zum Datenaustausch vorgesehen, wobei jede Kommunikationsverbindung über eine eigenständige E/A-Einheit mit der Steuerung verbunden ist. Wie in Fig. 2 gezeigt ist, ist jeder E/A-Einheit dann ein Rechenkern, der ersten E/A-Einheit der erste Rechenkern C1 und der zweiten E/A-Einheit der zweite Rechenkern C2 zugeordnet, die dann in dem ersten Zeitabschnitt Z1 bzw. dem dritten Zeitabschnitt Z3 des Steuerungszyklus 150 das Bereitstellen der Eingangsdaten 130, 135 und der Ausgangsdaten 140, 145 für die jeweilig zugeordnete E/A-Einheit ausführen. Diese Vorgehensweise ist insbesondere dann vorteilhaft, wenn eine hohe Datenlast an Eingangsdaten 130, 135 bzw. Ausgangsdaten 140, 145 im Rahmen der Steuerungsaufgabe gegeben ist. Durch die parallele Bereitstellung der Eingangsdaten 130, 135 bzw. Ausgangsdaten 140, 145 durch zwei Rechenkerne C1, C2 kann die Zeit für die Bereitstellung verkürzt und damit die Gesamtzeit für den Steuerungszyklus 150 minimiert werden.

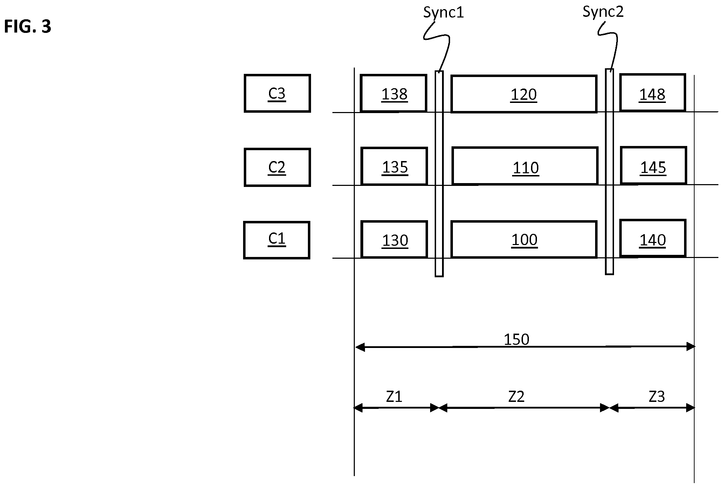

Fig. 3 zeigt eine weitere Variante des Ablaufes, bei der drei Kommunikationsverbindungen zwischen der Steuerung und dem technischen Prozess vorgesehen sind, wobei jede Kommunikationsverbindung über eine eigene E/A-Einheit in der Steuerung verfügt. Jeder E/A-Einheit ist dann ein Rechenkern C1, C2, C3 zugeordnet, der ersten E/A-Einheit der erste Rechenkern C1, der zweiten E/A-Einheit der zweite Rechenkern C2 und der dritten E/A-Einheit der dritte Rechenkern C3. Mit dieser Vorgehensweise kann die Parallelisierung der Bereitstellung der Eingangsdaten 130, 135, 138 bzw. der Ausgangsdaten 140, 145, 148 weiter erhöht und damit die Gesamtrechenzeit des Steuerungszyklus 150 weiter verkürzt werden.

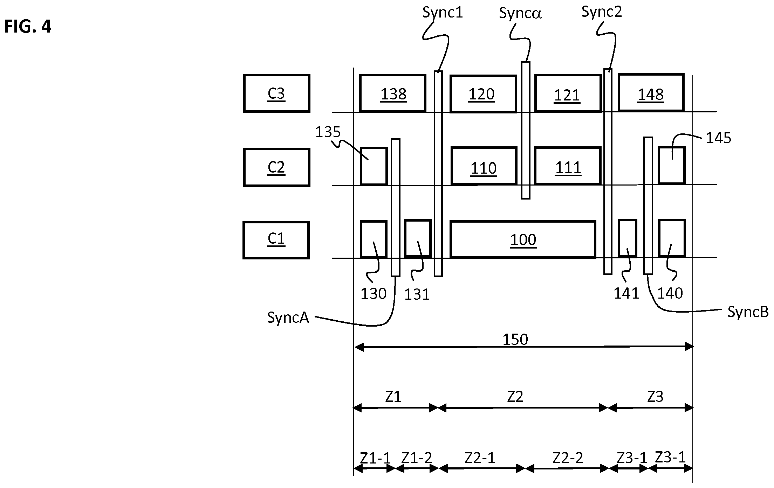

Fig. 4 zeigt eine weitere mögliche Abwandlung des Ablaufes, bei dem analog zu Fig. 3 drei Kommunikationsverbindungen zwischen der Steuerung und dem technischen Prozess vorgesehen sind. Jede Kommunikationsverbindung verfügt wiederum über eine eigene E/A-Einheit in der Steuerung, der ein Rechenkern C1, C2, C3 zugeordnet ist, der ersten E/A-Einheit der erste Rechenkern C1, der zweiten E/A-Einheit der zweite Rechenkern C2 und der dritten E/A-Einheit der dritte Rechenkern C3.

Im Unterschied zu den vorstehend beschriebenen Abläufen verfügt die Steuerung beim Ablauf gemäß Fig. 4 über drei Synchronisierungseinheiten, die unabhängig voneinander für unterschiedliche Synchronisierungen Sync1, Sync2, SyncA, SyncB, Syncα zuständig sind. Die drei Synchronisierungseinheiten können als ein oder mehrere eigenständige Bauelemente, beispielsweise als Teil der Kontrolleinheit ausgeführt sein. Es besteht jedoch auch die Möglichkeit, die Synchronisierung von einem Rechenkern C1, C2, C3 bzw. von allen Rechenkernen C1, C2, C3 gemeinsam als Programmbestandteil der Steuerungsaufgabe ausführen zu lassen.

Die erste Synchronisierungseinheit steuert, wie bereits in Zusammenhang mit den Abläufen in Fig. 1 bis Fig. 3 beschrieben, die beiden Synchronisierungen Sync1, Sync2 zwischen dem ersten Zeitabschnitt Z1 und dem zweiten Zeitabschnitt Z2 bzw. zwischen dem zweiten Zeitabschnitt Z2 und dem dritten Zeitabschnitt Z3.

Die drei Zeitabschnitte Z1, Z2, Z3 der Steuerungsaufgabe können aber in weitere Sub-Zeitabschnitte unterteilt sein, den jeweils Tasks für die Rechenkerne C1, C2, C3 zugeordnet sind, die dann zusätzlich synchronisiert werden müssen. Der Ablauf in Fig. 4 weist für jeden der drei Zeitabschnitte Z1, Z2, Z3 zwei solcher Sub-Zeitabschnitte für jeweils zwei der drei Rechenkerne auf. Es besteht aber die Möglichkeit, Sub-Zeitabschnitte nur in einzelnen Zeitabschnitten Z1, Z2, Z3 der Steuerungsaufgabe und für eine beliebige Anzahl der Rechenkerne C1, C2, C3 in der Steuerung vorzusehen. Weiterhin kann natürlich auch die Anzahl der Sub-Zeitabschnitte abhängig von den auszuführenden Tasks variiert werden.

Im ersten Zeitabschnitt Z1 beim Bereitstellen der Eingangsdaten der Module für den jeweils zugeordneten Rechenkern durch die Steuerung kann es beispielsweise erforderlich sein, die Eingangsdaten vor zu verarbeiten. Beim dem in Fig. 4 gezeigten Ablauf ist dies für die Eingangsdaten 130, 135 der ersten und zweiten E/A-Einheit erforderlich. Dazu ist der erste Zeitabschnitt Z1 in zwei Sub-Zeitabschnitte Z1-1, Z1-2 unterteilt. Die Eingangsdaten 130, 135 der ersten beiden E/A-Einheiten werden von dem ersten Rechenkern C1 mit einer ersten Task bzw. von dem zweiten Rechenkern C2 mit einer zweiten Task verarbeitet. Nach Beendigung ihrer jeweiligen Task melden sich der erste Rechenkern C1 und der zweite Rechenkern C2 bei der zweiten Synchronisierungseinheit an, die analog zu der ersten Synchronisationseinheit ausgelegt ist, die die beiden Synchronisierungen Sync1, Sync2 zwischen dem ersten Zeitabschnitt Z1 und dem zweiten Zeitabschnitt Z2 bzw. zwischen dem zweiten Zeitabschnitt Z2 und dem dritten Zeitabschnitt Z3 ausführt. Der Rechenkerne, der sich zuerst bei der zweiten Synchronisationseinheit anmeldet, wird in den Wartemodus versetzt, bis sich auch der andere Rechenkern angemeldet hat.

Der zweiten Synchronisierungseinheit ist bekannt, dass zwei Rechenkerne C1, C2 an dem Vorverarbeitungsprozess beteiligt sind. Dies kann analog zur ersten Synchronisierungseinheit dadurch erfolgen, dass die zweite Synchronisierungseinheit in der Initialisierungsphase die am Prozess beteiligten Rechenkerne C1, C2 erfasst. Alternativ kann der Synchronisierungseinheit die Anzahl auch seitens der Steuerung oder einer anderen Einheit, beispielsweise der ersten Synchronisierungseinheit, mitgeteilt werden.

Wenn sich die beiden an der Task beteiligten Rechenkerne C1, C2 bei der zweiten Synchronisationseinheit anmeldet haben, erkennt die zweite Synchronisationseinheit also, dass der Vorverarbeitungsprozess abgeschlossen ist. Die zweite Synchronisationseinheit führt dann die Synchronisierung SyncA zwischen dem ersten Sub-Zeitabschnitt Z1-1 und dem zweiten Sub-Zeitabschnitt Z1-2 des ersten Zeitabschnitts Z1 aus. Der Rechenkern C1 führt dann in einer weiteren Task im zweiten Sub-Zeitabschnitt Z1-2 des ersten Zeitabschnitts Z1 die Eingangsdaten 130, 135 zusammen und stellt die zusammengeführten Eingangsdaten dann als neue Eingangsdaten 131 für die weiteren Bearbeitung zur Verfügung.

Da für den zweiten Rechenkern C2 im zweiten Sub-Zeitabschnitt Z1-2 des ersten Zeitabschnitts Z1 keine Task vorgesehen ist, meldet sich der zweiten Rechenkern C2 direkt bei der ersten Synchronisationseinheit an und wird, von der ersten Synchronisationseinheit in den Wartemodus versetzt. Der ersten Synchronisationseinheit ist aus der Initialisierungsphase bekannt, dass an dem Prozess im ersten Zeitabschnitt Z1 drei Rechenkerne C1, C2, C3 beteiligt sind. Wenn der erste Rechenkern C1 nach Erledigung der weiteren Task im zweiten Sub-Zeitabschnitt Z1-2 des ersten Zeitabschnitts Z1 und der dritte Rechenkern C3 nach Erledigung der Task, dem Bereitstellen der dritten Eingangsdaten 138 im ersten Zeitabschnitt Z1 bei der ersten Synchronisationseinheit angemeldet haben, führt die erste Synchronisationseinheit dann die erste Synchronisation Sync1 aus, die bereits in Zusammenhang mit den Abläufen in Fig. 1 bis Fig. 3 beschrieben wurde.

Analog zu der Unterteilung des ersten Zeitabschnitts Z1 ist beim Ablauf gemäß Fig. 4 auch der zweite Zeitabschnitt Z2 in zwei Sub-Zeitabschnitte Z2-1, Z2-2 unterteilt. Die dritte Synchronisationseinheit, die für die Synchronisation Syncα zwischen dem ersten Sub-Zeitabschnitt Z2-1 und dem zweiten Sub-Zeitabschnitt Z2-2 des zweiten Zeitabschnitts Z2 zuständig ist, führt die Synchronisation zwischen dem ersten Sub-Zeitabschnitt Z2-1 und dem zweiten Sub-Zeitabschnitt Z2-2 des zweiten Zeitabschnitts Z2 dann analog zu der beschriebenen Arbeitsweise der ersten und der zweiten Synchronisationseinheit aus.

Der erste Rechenkern C1 verarbeitet die sowohl dem ersten Rechenkern C1 als auch dem zweiten Rechenkern C2 zugewiesenen Eingangsdaten 131 im zweiten Zeitabschnitt Z2 auf Basis der ersten Steuerungsroutine 100 und meldet sich nach Erledigung der Task bei der ersten Synchronisationseinheit an. Der zweite Rechenkern C2 dagegen führt mit den zugewiesenen Eingangsdaten 131 im zweiten Zeitabschnitt Z2 zwei Steuerungsroutinen aus. Auf Basis der zweiten Steuerungsroutine 110 verarbeitet der zweite Rechenkern C2 zunächst im ersten Sub-Zeitabschnitt Z2-1 des zweiten Zeitabschnitts Z2 die Eingangsdaten 131 und meldet sich nach Erledigung der Task bei der dritten Synchronisationseinheit an.

Auch dem dritten Rechenkern C3 sind im zweiten Zeitabschnitt Z2 zwei Steuerungsroutinen zur Verarbeitung der dem dritten Rechenkern C3 zugewiesenen Eingangsdaten 138 zugeordnet. Der dritte Rechenkern C3 arbeitet im ersten Sub-Zeitabschnitt Z2-1 des zweiten Zeitabschnitts Z2 mit den zugewiesenen Eingangsdaten 138 die dritte Steuerungsroutine 120 ab und meldet sich anschließend, wie der zweite Rechenkern C2, bei der dritten Synchronisationseinheit an.

Der dritten Synchronisationseinheit ist aus der Initialisierungsphase bekannt, dass an dem Prozess im ersten Sub-Zeitabschnitt Z2-1 des zweiten Zeitabschnitts Z2 der Steuerungsaufgabe zwei Rechenkerne C2, C3 beteiligt sind. Die dritte Synchronisationseinheit versetzt den Rechenkern, der seine Task zuerst erledigt hat, in den Wartemodus. Sobald sich nun beide an dem Prozess beteiligte Rechenkerne C2, C3 dann bei der dritten Synchronisationseinheit angemeldet haben, führt die der dritten Synchronisationseinheit die Synchronisation Syncα aus, um vom ersten Sub-Zeitabschnitt Z2-1 auf den zweiten Sub-Zeitabschnitt Z2-2 überzugehen.

Der zweite Rechenkern C2 und der dritte Rechenkern C3 führen dann im zweiten Sub-Zeitabschnitt Z2-2 des zweiten Zeitabschnitts Z2 jeweils eine weitere Steuerungsroutine 111, 121 aus. Nach Beendigung der Steuerungsroutinen 111, 121 melden sich der zweite Rechenkern C2 bzw. der dritte Rechenkern C3 jeweils direkt bei der ersten Synchronisationseinheit an.

Die erste Synchronisationseinheit weiß aus der Initialisierungsphase, dass im zweiten Zeitabschnitt Z2 der Steuerungsaufgabe alle drei Rechenkerne C1, C2, C3 an dem Prozess beteiligt sind. Bis sich nicht alle drei Rechenkerne C1, C2, C3 bei der ersten Synchronisationseinheit angemeldet haben, versetzt die erste Synchronisationseinheit den jeweils sich anmeldenden Rechenkern in den Wartemodus. Die zweite Synchronisation Sync2 wird dann von der ersten Synchronisationseinheit beim Übergang zwischen dem zweiten Zeitabschnitt Z2 und dem dritten Zeitabschnitt Z3 ausgeführt, sobald sich alle drei Rechenkerne C1, C2, C3 bei der ersten Synchronisationseinheit angemeldet haben.

Analog zum ersten Zeitabschnitt Z1 ist auch der dritte Zeitabschnitt Z3 für den ersten und zweiten Rechenkern C1, C2 in zwei Sub-Zeitabschnitte, einen ersten Sub-Zeitabschnitt Z3-1 und einen zweiten Sub-Zeitabschnitt Z3-2 unterteilt, wobei die Synchronisation wiederum von der zweiten Synchronisationseinheit durchgeführt wird.

Der erste Rechenkern C1 führt im ersten Sub-Zeitabschnitt Z3-1 des dritten Zeitabschnitts Z3 die Bereitstellung von Zwischen-Ausgangsdaten 141 durch. Sobald der erste Rechenkern C1 die Task erledigt hat, meldet sich der erste Rechenkern C1 bei der zweiten Synchronisationseinheit an. Der zweite Rechenkern C2, dem nach der zweiten Synchronisation Sync2 keine Task zugewiesen wurde, meldet sich sofort bei der zweiten Synchronisationseinheit an und wird in den Wartemodus versetzt.

Der zweiten Synchronisationseinheit ist aus der Initialisierungsphase bekannt, dass an dem von der zweiten Synchronisationseinheit zu überwachenden Prozess im dritten Zeitabschnitt Z3 der erste Rechenkern C1 und der zweite Rechenkern C2 beteiligt sind. Nachdem sich beide Rechenkerne C1, C2 dann bei der zweiten Synchronisationseinheit angemeldet haben, führt die zweite Synchronisationseinheit die weitere Synchronisation SyncB durch.

Der erste Rechenkern C1 und der zweite Rechenkern C2 verarbeiten nach der Synchronisation SyncB die Zwischen-Ausgangsdaten 141 weiter, um die Ausgangsdaten 140, 145 bereitzustellen. Parallel zu den beiden Sub-Zeitabschnitten Z3-1, Z3-2 des dritten Zeitabschnitts Z3 für den ersten und zweiten Rechenkern C1, C2, führt der dritte Rechenkern C3 im dritten Zeitabschnitt Z3 die Bereitstellung der Ausgangsdaten 148 durch.

Mit dem in Fig. 4 gezeigten Ablauf kann die Parallelisierung bei der Bereitstellung der Eingangsdaten 130, 135, 138 bzw. der Ausgangsdaten 140, 145, 148 im ersten Zeitabschnitt Z1 bzw. im dritten Zeitabschnitt Z3 sowie die Abarbeitung der Steuerungsroutinen im zweiten Zeitabschnitt Z2 weiter erhöht und damit die Gesamtrechenzeit des Steuerungszyklus 150 zusätzlich verkürzt werden.

Das Konzept der parallelisierten Abarbeitung einer Steuerungsaufgabe bzw. Steuerungsroutine 100, 110, 120 für eine Anzahl von eigenständig steuerbaren Modulen eines technischen Prozesses sieht drei Zeitabschnitte Z1, Z2, Z3 vor. Einen ersten Zeitabschnitt Z1 zum Einlesen und Bereitstellen der Eingangsdaten 130, 135, 138 der Module für den jeweilig zugeordneten Rechenkern C1, C2, C3, einen zweiten Zeitabschnitt Z2 zur Verarbeitung der Eingangsdaten zu Ausgangsdaten mittels der Steuerungsroutinen 100, 110, 120 und einen dritten Zeitabschnitt Z3 zum Bereitstellen und Ausgeben der Ausgangsdaten 140, 145, 148 für die Module. In allen drei Zeitabschnitten Z1, Z2, Z3 können jeweils mehrere Rechenkerne C1, C2, C3 parallel zur Bearbeitung genutzt werden. Es ist dabei jedoch nicht zwingend, dass immer alle Rechenkerne C1, C2, C3 zum Einsatz kommen.

Grundsätzlich besteht abhängig von dem vorgegebenen technischen Prozess, d.h. abhängig vom Volumen der Ein- und Ausgabedaten 130, 135, 138, 140, 145, 148 und der Anzahl der eigenständig steuerbaren Module die Möglichkeit, den Parallelisierungsgrad in den drei Zeitabschnitten Z1, Z2, Z3 des Steuerungszyklus 150, dem Bereitstellen der Eingangsdaten, dem Verarbeiten der Eingangsdaten zu Ausgangsdaten und dem Bereitstellen der Ausgangsdaten, individuell einzustellen, um die Arbeitsbelastung optimal auf die Rechenkerne C1, C2, C3 zu verteilen und damit eine maximale Verkürzung der Zeit des Steuerungszyklus 150 zu erreichen.

Bei einer Anzahl von n eingesetzten Rechenkernen sind folgende Varianten denkbar. Es können 1 bis n Rechenkerne für das Bereitstellen der Ein- bzw. Ausgangsdaten im ersten und dritten Zeitabschnitt eingesetzt werden. Die Rechenkerne sind dabei jeweils einer E/A-Einheit der Steuerung zugeordnet. Rechenkerne, die nicht zum Bereitstellen der Ein- und Ausgangsdaten im ersten und dritten Zeitabschnitt des Steuerungszyklus eingesetzt werden, melden sich direkt bei der Synchronisierungseinheit, die als eigenständige Einheit in der Steuerung vorliegt, aber auch als Programmbestandteil auf einem bzw. allen Rechenkernen vorgesehen sein kann, an. Alle nicht benötigen Rechenkerne befinden sich im Wartemodus bzw. werden in den Wartemodus versetzt. Im zweiten Zeitabschnitt des Steuerungszyklus, bei dem die Eingangsdaten mittels Steuerungsroutinen zu Ausgangsdaten verarbeitet werden, kann die parallele Berechnung wiederum von 1 bis n Rechenkernen erfolgen, abhängig davon, wie die Zuordnung der Rechenkerne zu den eigenständig steuerbaren Modulen des technischen Prozesses konfiguriert ist. Rechenkerne, die keine parallele Berechnung ausführen bzw. ihre Berechnung abgeschlossen haben, melden sich wiederum direkt bei der Synchronisierungseinheit an, welche diese Rechenkerne dann aus dem aktiven Modus in den Wartemodus versetzt. Grundsätzlich können natürlich in der Steuerung immer auch weitere Rechenkerne vorgesehen sein, die nicht an der Steuerungsaufgabe beteiligt sind bzw. andere Steuerungsaufgaben wahrnehmen.

Das Konzept zur parallelisierten Bearbeitung einer Steuerungsaufgabe eines technischen Prozesses für eine Anzahl von eigenständig steuerbaren Modulen eignet sich insbesondere zur Bewegungssteuerung im Rahmen von Automatisierungsaufgaben, bei denen extrem kurze Zykluszeiten hoch präzise eingehalten werden müssen, um Echtzeitbedingungen erfüllen zu können. Bewegungssteuerungen sind darüber hinaus in der Regel sehr rechenaufwändig, wobei jedoch oft aber identische Regelalgorithmen für die eigenständig steuerbaren Module ausgeführt werden müssen. Ferner müssen bei der Bewegungssteuerung meistens eine große Anzahl von Ein- und Ausgangsdaten zwischen dem Antriebssystem und der Steuerung ausgetauscht werden.

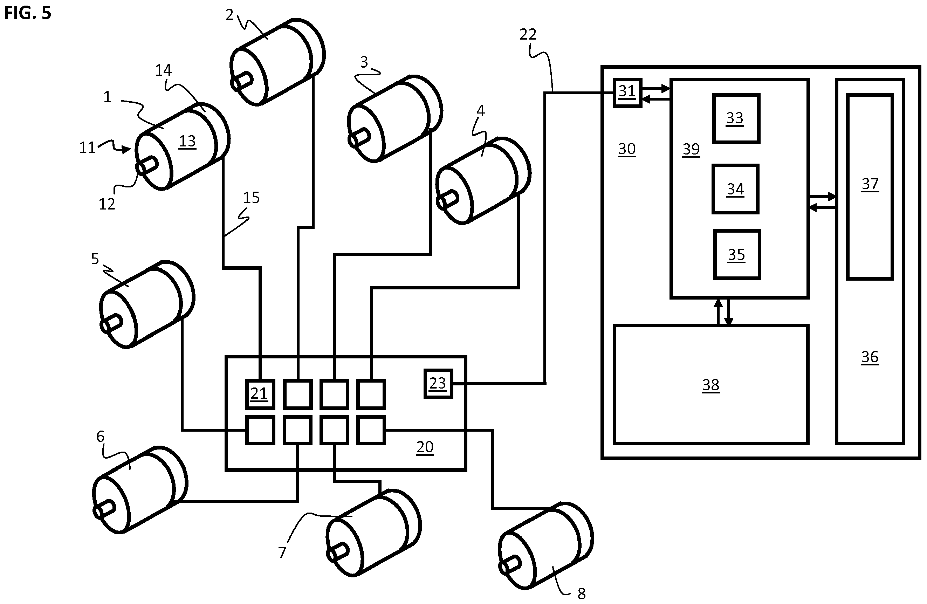

Fig. 5 zeigt einen ersten Anwendungsfall, bei dem das parallelisierte Steuerungskonzept im Rahmen eines Antriebssystems mit acht Achsen 1 bis 8 eingesetzt wird. Jeder Achse 1 bis 8 ist dabei, wie in Fig. 5 schematisch gezeigt, ein Motor 11 zugeordnet, der eine Antriebswelle 12, einen Antrieb mit Spulenpaket 13 und eine Feedbackeinheit 14 umfasst. Über die Feedbackeinheit 14 werden die Eingangsdaten der Achsen, z.B. die Geberdaten, ausgegeben und die Ausgangsdaten für die Achsen, z.B. die Stromwerte zum Ansteuern der Spulen im Antrieb, empfangen. Die Feedbackeinheiten 14 sind über eine Kommunikationsverbindung mit der Steuerung verbunden. Die Kommunikationsverbindung ist dabei so ausgeführt, dass jede Feedbackeinheit 14 an eine Kommunikationsleitung 15 angeschlossen ist.

Alternativ besteht auch die Möglichkeit, dass an Stelle einer Feedbackeinheiten im Motor eine Kommunikationseinheit vorgesehen ist, welche die Eingangsdaten übermittelt und die Ausgangsdaten an ein Leistungsteil übergibt, das die Spulen dann betreibt. Auch wäre es denkbar, dass das Leistungsteil separat angeordnet ist, und mit dem Motor eine Kommunikationsverbindung aufweist.

Die Kommunikationsleitungen 15 sind mit Anschlüssen 21 einer Schnittstelleneinheit 20 verbunden. Die Schnittstelleneinheit 20 setzt die auf den Kommunikationsleitungen 15 parallel ausgetauschten Daten in seriell ablaufende oder übertragende Datenpakete um. Die Datenpakete werden dann über einen weiteren Anschluss 23 der Schnittstelleneinheit 20, eine weitere Kommunikationsleitung 22, die zwischen der Schnittstelleneinheit 20 und einer E/A-Einheit 31 der Steuerung 30 besteht, ausgetauscht. Für die Datenkommunikation zwischen der Schnittstelleneinheit 20 und der E/A-Einheit 31 der Steuerung 30 eignet sich dabei insbesondere ein Netzwerkprotokoll wie das Ether-CAT-Protokoll, mit dem ein schneller Datenaustausch erfolgen kann.

Grundsätzlich besteht aber auch die Möglichkeit, dass die Feedbackeinheiten 14 der Achsen 1 bis 8 ohne Zwischenschalten einer Schnittstelleneinheit 20 direkt mit E/A-Einheiten 31 der Steuerung 30 verbunden sind. Auch kann alternativ vorgesehen sein, dass mehrere Schnittstelleneinheiten 20, die jeweils an eine E/A-Einheit 31 der Steuerung 30 angeschlossen sind, zum Einsatz kommen.

Bei dem in Fig. 5 gezeigten ersten Anwendungsfall weist die Steuerung 30 neben der E/A-Einheit 31 einen Prozessor 39 mit drei Rechenkernen 33, 34, 35, eine Kontrolleinheit 36, die eine Synchronisierungseinheit 37 enthält, und einen Speicher 38 auf. Der Prozessor 39 steht dabei mit der E/A-Einheit 31, der Kontrolleinheit 36 und dem Speicher 38 in Verbindung, um Daten auszutauschen. Die Steuerung kann natürlich weitere nicht gezeigte Hardware wie beispielweise weitere Prozessoren, Speicher etc. aufweisen.

Die Steuerung des in Fig. 5 gezeigten Antriebssystems ist so konfiguriert, dass dem ersten Rechenkern 33 im Prozessor 39 der Steuerung 30 die ersten drei Achsen 1, 2, 3, dem zweiten Rechenkern 34 die drei weitere Achsen 4, 5, 6 und dem dritten Rechenkern 35 die verbleibenden zwei Achsen 7, 8 zugeordnet sind. Das Bereitstellen der Ein- und Ausgangsdaten im Speicher 38 erfolgt durch den ersten Rechenkern 33, der auf die E/A-Einheit 31 der Steuerung 30 Zugriff hat. Der Wechsel zwischen dem ersten und zweiten Zeitabschnitt bzw. dem zweiten und dritten Zeitabschnitt des Steuerungszyklus wird durch die Synchronisierungseinheit 37 in der Kontrolleinheit 36 der Steuerung 30 getriggert.

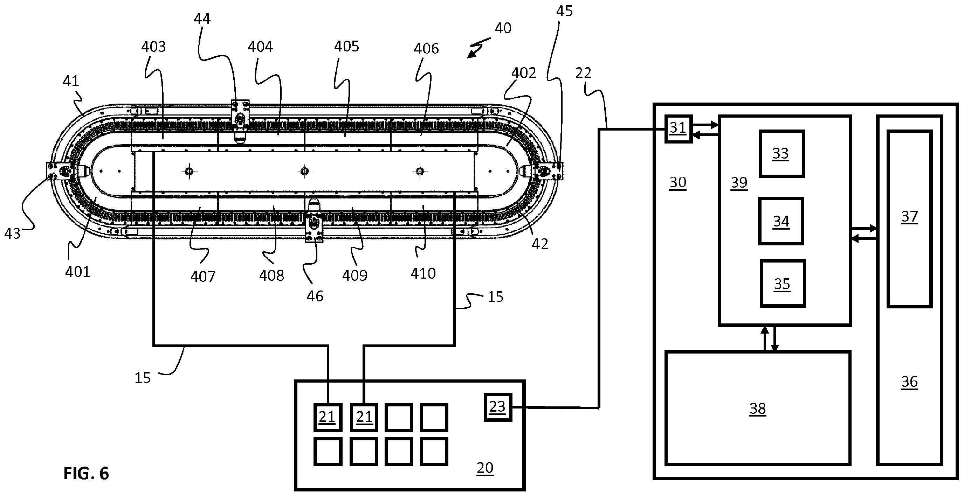

Fig. 6 zeigt einen weiteren Anwendungsfall, bei dem die in Fig. 5 gezeigte Steuerung 30 mit einer Schnittstelleneinheit 20 zum Steuern eines linearen Transportsystems 40 eingesetzt wird. Das lineare Transportsystem 40 setzt sich aus einer Mehrzahl von Motormodulen, in der in Fig. 5 gezeigten Ausgestaltung aus zehn Motormodulen 401 bis 410 zusammen. Die Motormodule 401 bis 410 weisen einen Verfahrweg 41 und eine vorgegebene Anzahl von längs des Verfahrweges 41 angeordneten eigenständig bestrombaren Antriebsspulen 42 auf. Bei der in Fig. 6 gezeigten Auslegung bilden die Motormodule 401 bis 410 zusammen einen geschlossenen elliptischen Verfahrweg 41, wobei acht Motormodule 403 bis 410 gerade und zwei Motormodule 401, 402 als Kurvenmodule ausgebildet sind.

Auf dem Verfahrweg 41 der Motormodule 401 bis 410 sind Transportelemente in Form von Schlitten 43 angeordnet, die die eigenständig steuerbaren Module des technischen Prozesses bilden. Bei der in Fig. 6 gezeigten Auslegung sind vier solche Schlitten 43, 44, 45, 46 vorgesehen. Grundsätzlich besteht die Möglichkeit, dass eine beliebige Anzahl von Transportelementen, die eigenständig angesteuert werden, am Verfahrweg 41 angeordnet sein können.

Jeder Schlitten 43 bis 46 weist eine Magneteinrichtung auf, um durch die Antriebsspulen 42 der Motormodule 401 bis 410 mittels eines wandernden Magnetfeldes bewegt zu werden. Die Steuerung der Schlitten 43 bis 46 erfolgt über das Steuern der Bestromung der Antriebsspulen 42 in den Motormodulen 401 bis 410. Als Eingangsdaten für die Steuerung 30 liefern die Motormodule 401 bis 410 Positionsdaten der Schlitten 43 bis 46, die mittels an den Motormodulen 401 bis 410 angeordneten Positionserfassungseinrichtungen erfasst werden.

Der Datenaustausch erfolgt bei dem in Fig. 6 gezeigten Anwendungsfall über speziell ausgezeichnete Motormodule 403, 410, die auch als Einspeisemodule bezeichnet werden. Über die Einspeisemodule tauschen dann die mit dem Einspeisemodul verbundenen weiteren Motormodule 401, 402, 404 bis 409 Daten mit der Steuerung 30 aus. Die Motormodule 401 bis 410 sind untereinander mit den Einspeisemodulen über eine Kommunikationsleitung verbunden. Bei dem in Fig. 6 gezeigten Anwendungsfall sind zwei Motormodule 403, 410 als Einspeisemodule vorgesehen, die jeweils für den Datenaustausch von fünf weiteren Motormodulen 401, 402, 404 bis 409 verantwortlich sind. Grundsätzlich besteht jedoch die Möglichkeit, dass jedes Motormodul 401 bis 410 eigenständig über eine Kommunikationsleitung 15 direkt oder über die zwischengeschaltete Schnittstelleneinheit 20 mit der Steuerung 30 verbunden ist.

Die Steuerung des linearen Transportsystems 40 in Fig. 5 ist so konfiguriert, dass der erste bzw. dritte Zeitabschnitt des Steuerungszyklus, das Bereitstellen der Eingangs- und Ausgangsdaten von einem Rechenkern, dem ersten Rechenkern 33 der Steuerung 30, der Zugriff auf die E/A-Einheit 31 hat, ausgeführt wird. Die Berechnung der Steuerdaten für die einzelnen Schlitten 43 bis 46 wird dann parallel durch die drei Rechenkerne 33, 34, 35 des Prozessors 39 ausgeführt, wobei zwei Schlitten 43, 44 dem ersten Rechenkern 33, ein weiterer Schlitten 45 dem zweiten Rechenkern 34 und der letzte Schlitten 46 dem dritten Rechenkern 35 zugeordnet ist.

Das parallelisierte Steuerungskonzept ist besonders vorteilhaft für lineare Transportsysteme, da sehr kurze Zykluszeiten eingehalten und eine Vielzahl von Ein- und Ausgangsdaten verarbeitet werden müssen. Außerdem können die Ein- und Ausgangsdaten der Motormodule auf einfache Weise immer auch anderen Motormodulen zugeordnet werden. Eine solche Neuzuordnung ist dann erforderlich, wenn die Schlittenposition zwischen verschiedenen Motormodulen gewechselt hat. Auch sind bei linearen Transportsystemen, wenn sie im Rahmen der Fertigung eingesetzt werden, oft hohe Sicherheitsanforderungen einzuhalten, was die Ansteuerung der einzelnen Transportelemente betrifft. Durch eine entsprechende Konfiguration und Aufteilung der Berechnung bzw. durch die Möglichkeit, die Ausgangsdaten für ein Transportelement mehrfach auf verschiedenen Kernen zu berechnen, können solche Sicherheitsanforderungen zuverlässig eingehalten werden.

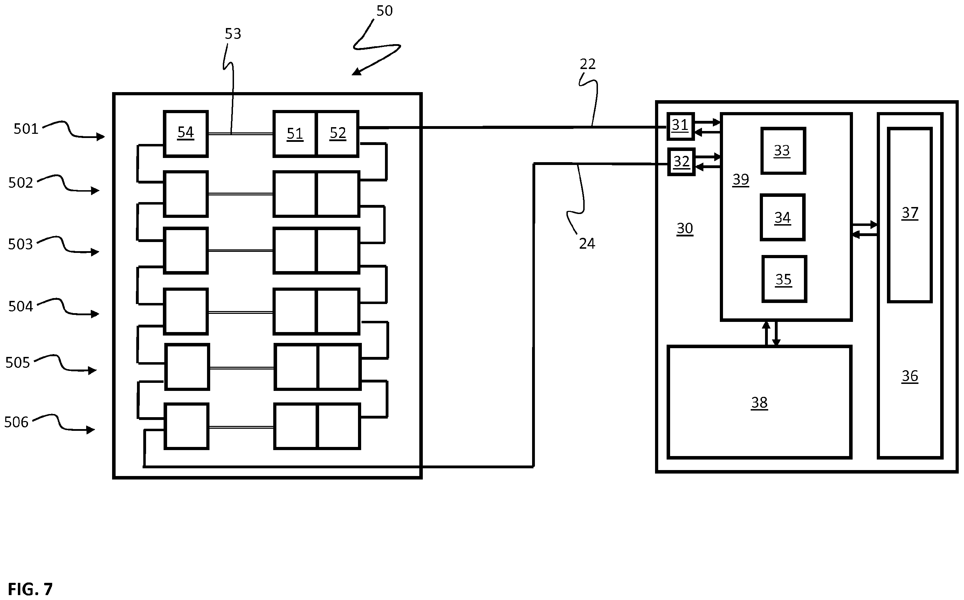

In Fig. 7 ist ein weiterer Anwendungsfall für einen Mehr-Achsen-Roboter 50, im vorliegenden Fall einen Sechs-Achsen-Roboter, gezeigt, bei dem für jede der sechs Achsen 501 bis 506 eine Lage- und Geschwindigkeitsregelung durchgeführt wird. Jede Roboter-Achse 501 bis 506 weist einen Motor 51 mit einer angeschlossenen Umrichtereinheit 52 auf, die über eine mechanische Verbindung 53 mit einer Feedbackeinheit 54 verbunden sind. Die Feedbackeinheit 54 und die Umrichtereinheit 52 am Motor 51 tauschen mit der Steuerung Ein- und Ausgangsdaten aus. Die Umrichtereinheiten 52 und die Feedbackeinheiten 54 der einzelnen Roboterachsen 501 bis 506 sind dabei getrennt über eine eigene Kommunikationsverbindungen 22, 24 mit der Steuerung 30 verbunden, die deshalb zwei E/A-Einheiten 31, 32 aufweist, wobei die erste E/A-Einheiten 31 über die erste Kommunikationsverbindung 22 Ein- und Ausgangsdaten für die Umrichtereinheiten und die zweite E/A-Einheiten 32 über die zweite Kommunikationsverbindung 24 Ein- und Ausgangsdaten für die Feedbackeinheiten ein- und ausgibt.

Das im ersten und dritten Zeitabschnitt des Steuerungszyklus auszuführende Bereitstellen der Ein- bzw. Ausgangsdaten erfolgt bei dem in Fig. 7 gezeigten Anwendungsfall getrennt durch jeweils einen Rechenkern, wobei die erste E/A-Einheit 31 mit den Ein- und Ausgangsdaten für die Umrichtereinheiten dem ersten Rechenkern 33 und die zweiten E/A-Einheit 32 mit den Ein- und Ausgangsdaten für die Feedbackeinheiten dem zweiten Rechenkern 34 zugeordnet ist.

Die Berechnung der Ausgangsdaten auf der Grundlage der Eingangsdaten für die einzelnen Roboterachsen 501 bis 506 wird parallel durch alle drei Rechenkerne 33, 34, 35 ausgeführt, wobei den ersten beiden Achsen 501, 502 der erste Rechenkern 33, weiteren zwei Achsen 503, 504 der zweite Rechenkern 34 und den verbliebenen zwei Achsen 505, 506 der dritte Rechenkern 35 zugeordnet ist.

Mit dem erfindungsgemäßen parallelisierten Steuerungskonzept lassen sich grundsätzlich Steuerungsaufgaben mit einer Mehrzahl von eigenständig steuerbaren Modulen eines technischen Prozesses flexibel und zuverlässig abarbeiten, wobei durch die Möglichkeit einer variablen Ausgestaltung der Parallelisierung sowohl beim Bereitstellen der Ein- und Ausgangsdaten als auch beim Berechnen der Ausgangsdaten auf den Eingangsdaten sich kurze Zykluszeiten erreichen lassen.

## Patentansprüche

1. Verfahren zum Steuern eines technischen Prozesses, der eine Steuerungsaufgabe für eine Anzahl von eigenständig steuerbaren Modulen umfasst, auf einer Steuerung, die eine Anzahl n von im Rahmen der Steuerungsaufgabe eingesetzten Rechenkernen (C1, C2, C3) und eine Synchronisierung (Sync1, Sync2) umfasst, wobei der technische Prozess mit der Steuerung wenigstens eine Kommunikationsverbindung zum Datenaustausch aufweist und die Module jeweils einem Rechenkern (C1, C2, C3) zugeordnet sind, **dadurch gekennzeichnet, dass** in einem Steuerungszyklus (150) folgende Schritte ausgeführt werden:
Bereitstellen von über die wenigstens eine Kommunikationsverbindung durch die Steuerung erfassten Eingangsdaten der Module für den jeweils zugeordneten Rechenkern in einem ersten Zeitabschnitt (Z1) durch die Steuerung, wobei für das Bereitstellen der Eingangsdaten 1 bis n Rechenkerne eingesetzt werden, wobei die Rechenkerne von den 1 bis n Rechenkernen, die nicht zum Bereitstellen der Eingangsdaten eingesetzt werden, sich bei der Synchronisierung anmelden und in den Wartemodus versetzt werden, und wobei sich die 1 bis n Rechenkerne, die zum Bereitstellen der Eingangsdaten eingesetzt werden, nach Erledigung der zugeordneten Task bei der Synchronisierung anmelden, wobei der jeweilige Rechenkern in den Wartemodus versetzt wird, solange nicht jeder der n Rechenkerne bei der Synchronisierung angemeldet ist;
Synchronisieren (Sync1) der n Rechenkerne, sobald die n Rechenkerne bei der Synchronisierung angemeldet sind, wobei alle in den Wartemodus versetzten Rechenkerne wieder in den aktiven Modus versetzt werden;
Verarbeiten der Eingangsdaten der Module durch den jeweils zugeordneten Rechenkern in einem zweiten Zeitabschnitt (Z2), um Ausgangsdaten für die Module zu erzeugen, wobei die Rechenkerne, die nicht zum Verarbeiten der Eingangsdaten der Module eingesetzt werden, sich bei der Synchronisierung anmelden und in den Wartemodus versetzt werden, wobei sich die Rechenkerne, die zum Verarbeiten der Eingangsdaten der Module eingesetzt werden, nach Erledigung der zugeordneten Task bei der Synchronisierung anmelden, wobei der jeweilige Rechenkern in den Wartemodus versetzt wird, solange nicht jeder der n Rechenkerne bei der Synchronisierung angemeldet ist;
Synchronisieren (Sync2) der n Rechenkerne, sobald die n Rechenkerne bei der Synchronisierung angemeldet sind, wobei alle in den Wartemodus versetzten Rechenkerne wieder in den aktiven Modus versetzt werden; und
Bereitstellen der Ausgangsdaten für die Module durch die Steuerung zum Ausgeben der Ausgangsdaten für die Module auf der wenigstens einen Kommunikationsverbindung durch die Steuerung in einem dritten Zeitabschnitt (Z3), wobei für das Bereitstellen der Ausgangsdaten 1 bis n Rechenkerne eingesetzt werden, wobei die Rechenkerne von den 1 bis n Rechenkernen, die nicht zum Bereitstellen der Ausgangsdaten eingesetzt werden, sich bei der Synchronisierung anmelden und in den Wartemodus versetzt werden, und wobei sich die 1 bis n Rechenkerne,
die zum Bereitstellen der Ausgangsdaten eingesetzt werden, nach Erledigung der zugeordneten Task bei der Synchronisierung anmelden, wobei der jeweilige Rechenkern in den Wartemodus versetzt wird, solange nicht jeder der n Rechenkerne bei der Synchronisierung angemeldet ist.

2. Verfahren nach Anspruch 1,
wobei wenigstens einer der Schritte Bereitstellen der Eingangsdaten, Verarbeiten der Eingangsdaten zu den Ausgangsdaten und Bereitstellen der Ausgangsdaten in wenigstens zwei Abschnitte unterteilt ist, denen jeweils wenigstens eine Task zugeordnet ist, wobei die in den wenigstens zwei Abschnitten eingesetzten Rechenkerne durch die Synchronisierung (SyncA, SyncB, Syncα) zwischen den zwei Abschnitten synchronisiert wird, in dem, sobald die in den wenigstens zwei Abschnitten eingesetzten Rechenkerne bei der Synchronisierung angemeldet sind, alle in den Wartemodus versetzten Rechenkerne wieder in den aktiven Modus versetzt werden.

3. Verfahren nach Anspruch 1 oder 2,
wobei die Synchronisierung als ein oder mehrere eigenständige Bauelemente ausgebildet ist oder auf einem oder mehreren Rechenkernen als Programmbestandteil der Steuerungsaufgabe ausführt wird.

4. Verfahren nach einem der Ansprüche 1 bis 3,
wobei die Eingangsdaten der Module dem jeweils zugeordneten Rechenkern in einem zugeordneten Speicherbereich zur Verfügung gestellt werden, wobei sich mehrere Rechenkerne vorzugsweise einen Speicherbereich teilen.

5. Verfahren nach einem der Ansprüche 1 bis 4,
wobei in einer Initialisierungsphase ein Rechenkern die eigenständig steuerbaren Module des technischen Prozesses erfasst und die erfassten Module jeweils einem Rechenkern nach wenigstens einem vorgegebenen Kriterium zuordnet, wobei insbesondere eigenständig steuerbare Module mit besonderen Sicherheitsanforderungen auf verschiedene Rechenkerne verteilt werden.

6. Verfahren nach einem der Ansprüche 1 bis 5,
wobei der technische Prozess mit der Steuerung eine Mehrzahl von Kommunikationsverbindungen zum Datenaustausch aufweist, wobei das Bereitstellen der über die jeweilige Kommunikationsverbindung eingelesenen Eingangsdaten und das Bereitstellen der über die jeweilige Kommunikationsverbindung auszulesenden Ausgangsdaten durch einen der Kommunikationsverbindung zugeordneten Rechenkern erfolgt.

7. Verfahren nach einem der Ansprüche 1 bis 6,
wobei der technische Prozess eine Bewegungssteuerung der eigenständig steuerbaren Module umfasst.

8. Steuerung für einen technischen Prozess, der eine Steuerungsaufgabe für eine Anzahl von eigenständig steuerbaren Modulen umfasst, mit
einer Anzahl n von im Rahmen der Steuerungsaufgabe eingesetzten Rechenkernen (33, 34, 35), wobei die Modulen jeweils einem Rechenkern zugeordnet sind,
wenigstens einer E/A-Einheit (31, 32), die ausgelegt ist, über eine Kommunikationsverbindung mit dem technischen Prozess Daten auszutauschen, und
einer Synchronisierung (Sync1, Sync2),
**dadurch gekennzeichnet, dass**
die Steuerung (30) ausgelegt ist, über das E/A-Modul erfasste Eingangsdaten der Module dem jeweils zugeordneten Rechenkern in einem ersten Zeitabschnitt (Z1) bereitzustellen und die Rechenkerne, denen Module zugeordnet sind, zu synchronisieren, wenn die Eingangsdaten bereitstehen, wobei für das Bereitstellen der Eingangsdaten 1 bis n Rechenkerne eingesetzt werden, wobei die Rechenkerne von den 1 bis n Rechenkernen, die nicht zum Bereitstellen der Eingangsdaten eingesetzt werden, sich bei der Synchronisierung anmelden und in den Wartemodus versetzt werden, und wobei sich die 1 bis n Rechenkerne, die zum Bereitstellen der Eingangsdaten eingesetzt werden, nach Erledigung der zugeordneten Task bei der Synchronisierung anmelden, wobei der jeweilige Rechenkern in den Wartemodus versetzt wird, solange nicht jeder der n Rechenkerne bei der Synchronisierung angemeldet ist, und wobei zum Synchronisieren (Sync1) der n Rechenkerne, sobald die n Rechenkerne bei der Synchronisierung angemeldet sind, alle in den Wartemodus versetzten Rechenkerne wieder in den aktiven Modus versetzt werden;
wobei die Rechenkerne ausgelegt sind, nach der Synchronisation die zugeordneten Eingangsdaten der Module in einem zweiten Zeitabschnitt (Z2) zu verarbeiten, um Ausgangsdaten für die Module zu erzeugen, wobei jeder Rechenkern das Ende der Verarbeitung signalisiert, wobei Rechenkerne, die nicht zum Verarbeiten der Eingangsdaten der Module eingesetzt werden, sich bei der Synchronisierung anmelden und in den Wartemodus versetzt werden, wobei ich die Rechenkerne, die zum Verarbeiten der Eingangsdaten der Module eingesetzt werden, nach Erledigung der zugeordneten Task bei der Synchronisierung anmelden, wobei der jeweilige Rechenkern in den Wartemodus versetzt wird, solange nicht jeder der n Rechenkerne bei der Synchronisierung angemeldet ist, und wobei die Steuerung ausgelegt ist, wenn alle Rechenkerne das Ende der Verarbeitung signalisiert haben, die Ausgangsdaten für die Module in einem dritten Zeitabschnitt (Z3) bereitzustellen, um die Ausgangsdaten über das E/A-Modul auf der Kommunikationsverbindung auszugeben, wobei für das Bereitstellen der Ausgangsdaten 1 bis n Rechenkerne eingesetzt werden, wobei die Rechenkerne von den 1 bis n Rechenkernen, die nicht zum Bereitstellen der Ausgangsdaten eingesetzt werden, sich bei der Synchronisierung anmelden und in den Wartemodus versetzt werden, und wobei sich die 1 bis n Rechenkerne, die zum Bereitstellen der Ausgangsdaten eingesetzt werden, nach Erledigung der zugeordneten Task bei der Synchronisierung anmelden, wobei der jeweilige Rechenkern in den Wartemodus versetzt wird, solange nicht jeder der n Rechenkerne bei der Synchronisierung angemeldet ist.

9. Steuerung nach Anspruch 8,
wobei die Steuerung (30) ausgelegt ist, wenigstens einen der Vorgänge Bereitstellen der Eingangsdaten, Verarbeiten der Eingangsdaten zu den Ausgangsdaten und Bereitstellen der Ausgangsdaten in wenigstens zwei Abschnitte zu unterteilen, denen jeweils eine Task zugeordnet ist, wobei durch die in den wenigstens zwei Abschnitten eingesetzten Rechenkerne durch die Synchronisierung (SyncA, SyncB, Syncα) zwischen den zwei Abschnitten ein Synchronisationsvorgang ausgeführt wird, in dem, sobald die in den wenigstens zwei Abschnitten eingesetzten Rechenkerne bei der Synchronisierung angemeldet sind, alle in den Wartemodus versetzten Rechenkerne wieder in den aktiven Modus versetzt werden.

10. Steuerung nach Anspruch 8 oder 9,
wobei die Synchronisierung als ein oder mehreren eigenständige Bauelemente ausgebildet ist oder auf einem oder mehrere Rechenkernen als Programmbestandteil der Steuerungsaufgabe ausführt wird.

11. Steuerung nach einem der Ansprüche 8 bis 10,
wobei die Steuerung (30) einen Speicher (38) aufweist, in dem jedem Rechenkern (33, 34, 35) ein Speicherbereich zur Verfügung gestellt ist, in dem die Eingangsdaten der Module für den Rechenkern bereitstehen, wobei sich mehrere Rechenkerne (33, 34, 35) vorzugsweise einen Speicherbereich teilen.

12. Steuerung nach einem der Ansprüche 8 bis 11,
wobei ein Rechenkern ausgelegt ist, in einer Initialisierungsphase die eigenständig steuerbaren Module des technischen Prozesses zu erfassen und die erfassten Module jeweils einem Rechenkern nach wenigstens einem vorgegebenen Kriterium zuordnet.

13. Steuerung nach einem der Ansprüche 8 bis 12,
mit einer Mehrzahl von E/A-Einheiten (31, 32), die jeweils ausgelegt sind, über eine zugeordnete Kommunikationsverbindung mit dem technischen Prozess Daten auszutauschen,
wobei jeder E/A-Einheit ein Rechenkern zugeordnet ist, der ausgelegt ist, das Bereitstellen der Eingangs- und der Ausgangsdaten für die jeweils zugeordnete E/A-Einheit auszuführen.

14. Steuerung nach einem der Ansprüche 8 bis 13,
wobei die Steuerung (30) ausgelegt ist, eine Bewegungssteuerung der eigenständig steuerbaren Module auszuführen.

15. Antriebssystem mit einer Anzahl von Antriebselementen als eigenständig steuerbare Module und einer Steuerung nach Anspruch 14, insbesondere mit einer Mehrzahl von Motormodulen (401 - 410), die jeweils einen Verfahrweg und eine Mehrzahl von längs des Verfahrweges angeordneten, eigenständig bestrombaren Antriebsspulen aufweisen, wobei die Antriebselemente jeweils eine Magneteinrichtung aufweisen, um durch die Antriebsspulen bewegt zu werden,
wobei eine Anzahl von Motormodulen aus der Mehrzahl von Motormodulen als Einspeisemodule (403, 410) für die Mehrzahl von Motormodulen ausgelegt sind, die jeweils über eine Kommunikationsleitung an die Steuerung (30) angeschlossen sind, wobei insbesondere eine E/A-Einheit der Steuerung ausgelegt ist, über mehrere Kommunikationswege Daten auszutauschen.

## Claims

1. Method for controlling a technical process, which comprises a control task for a number of independently controllable modules, on a controller comprising a number n of computing cores (C1, C2, C3) used during the control task and a synchronization means (Sync1, Sync2), wherein the technical process has at least one communication connection to the controller for the purpose of interchanging data and the modules are each assigned to a computing core (C1, C2, C3), **characterized in that** the following steps are carried out in a control cycle (150): providing input data relating to the modules, which are captured by the controller via the at least one communication connection, for the respectively assigned computing core in a first time period (Z1) by means of the controller, wherein 1 to n computing cores are used to provide the input data, wherein the computing cores of the 1 to n computing cores which are not used to provide the input data register with the synchronization means and are changed to the waiting mode, and wherein the 1 to n computing cores which are used to provide the input data register with the synchronization means after performing the assigned task, wherein the respective computing core is changed to the waiting mode as long as not every one of the n computing cores is registered with the synchronization means;
synchronizing (Sync1) the n computing cores as soon as the n computing cores are registered with the synchronization means, wherein all computing cores which have been changed to the waiting mode are changed to the active mode again;
processing the input data relating to the modules by means of the respectively assigned computing core in a second time period (Z2) in order to generate output data for the modules, wherein the computing cores which are not used to process the input data relating to the modules register with the synchronization means and are changed to the waiting mode, wherein the computing cores which are used to process the input data relating to the modules register with the synchronization means after performing the assigned task, wherein the respective computing core is changed to the waiting mode as long as not every one of the n computing cores is registered with the synchronization means;
synchronizing (Sync2) the n computing cores as soon as the n computing cores are registered with the synchronization means, wherein all computing cores which have been changed to the waiting mode are changed to the active mode again; and
providing the output data for the modules by means of the controller for the purpose of outputting the output data for the modules on the at least one communication connection by means of the controller in a third time period (Z3), wherein 1 to n computing cores are used to provide the output data, wherein the computing cores of the 1 to n computing cores which are not used to provide the output data register with the synchronization means and are changed to the waiting mode, and wherein the 1 to n computing cores which are used to provide the output data register with the synchronization means after performing the assigned task, wherein the respective computing core is changed to the waiting mode as long as not every one of the n computing cores is registered with the synchronization means.

2. Method according to Claim 1,
wherein at least one of the steps of providing the input data, processing the input data to form the output data and providing the output data is subdivided into at least two sections, each of which is assigned at least one task, wherein the computing cores used in the at least two sections are synchronized by the synchronization means (SyncA, SyncB, Syncα) between the two sections by virtue of the fact that, as soon as the computing cores used in the at least two sections are registered with the synchronization means, all computing cores which have been changed to the waiting mode are changed to the active mode again.

3. Method according to Claim 1 or 2,
wherein the synchronization means is in the form of one or more independent components or is executed on one or more computing cores as a program part of the control task.

4. Method according to one of Claims 1 to 3,
wherein the input data relating to the modules are made available to the respectively assigned computing core in an assigned memory area, wherein a plurality of computing cores preferably share a memory area.

5. Method according to one of Claims 1 to 4,
wherein, in an initialization phase, a computing core captures the independently controllable modules of the technical process and respectively assigns the captured modules to a computing core according to at least one predefined criterion, wherein independently controllable modules with special security requirements, in particular, are distributed to different computing cores.

6. Method according to one of Claims 1 to 5,
wherein the technical process has a plurality of communication connections to the controller for the purpose of interchanging data, wherein the input data which have been read in via the respective communication connection and the output data to be read via the respective communication connection are provided by a computing core assigned to the communication connection.

7. Method according to one of Claims 1 to 6,
wherein the technical process comprises motion control of the independently controllable modules.

8. Controller for a technical process, which comprises
a control task for a number of independently controllable modules, having
a number n of computing cores (33, 34, 35) which are used during the control task, wherein the modules are each assigned to a computing core,
at least one I/O unit (31, 32) which is designed to interchange data with the technical process via a communication connection, and
a synchronization means (Sync1, Sync2),
**characterized in that**
the controller (30) is designed to provide the respectively assigned computing core with input data relating to the modules, which are captured via the I/O module, in a first time period (Z1) and to synchronize the computing cores to which modules are assigned when the input data are available, wherein 1 to n computing cores are used to provide the input data, wherein the computing cores of the 1 to n computing cores which are not used to provide the input data register with the synchronization means and are changed to the waiting mode, and wherein the 1 to n computing cores which are used to provide the input data register with the synchronization means after performing the assigned task, wherein the respective computing core is changed to the waiting mode as long as not every one of the n computing cores is registered with the synchronization means, and wherein, in order to synchronize (Sync1) the n computing cores, as soon as the n computing cores are registered with the synchronization means, all computing cores which have been changed to the waiting mode are changed to the active mode again;
wherein the computing cores are designed, after synchronization, to process the assigned input data relating to the modules in a second time period (Z2) in order to generate output data for the modules, wherein each computing core signals the end of the processing, wherein computing cores which are not used to process the input data relating to the modules register with the synchronization means and are changed to the waiting mode, wherein the computing cores which are used to process the input data relating to the modules register with the synchronization means after performing the assigned task, wherein the respective computing core is changed to the waiting mode as long as not every one of the n computing cores is registered with the synchronization means, and
wherein the controller is designed, when all computing cores have signalled the end of the processing, to provide the output data for the modules in a third time period (Z3) in order to output the output data on the communication connection via the I/O module, wherein 1 to n computing cores are used to provide the output data, wherein the computing cores of the 1 to n computing cores which are not used to provide the output data register with the synchronization means and are changed to the waiting mode, and wherein the 1 to n computing cores which are used provide the output data register with the synchronization means after performing the assigned task, wherein the respective computing core is changed to the waiting mode as long as not every one of the n computing cores is registered with the synchronization means.

9. Controller according to Claim 8,
wherein the controller (30) is designed to subdivide at least one of the operations of providing the input data, processing the input data to form the output data and providing the output data into at least two sections, each of which is assigned a task, wherein the computing cores used in the at least two sections carry out a synchronization operation by means of the synchronization means (SyncA, SyncB, Syncα) between the two sections by virtue of the fact that, as soon as the computing cores used in the at least two sections are registered with the synchronization means, all computing cores which have been changed to the waiting mode are changed to the active mode again.

10. Controller according to Claim 8 or 9,
wherein the synchronization means is in the form of one or more independent components or is executed on one or more computing cores as a program part of the control task.

11. Controller according to one of Claims 8 to 10,
wherein the controller (30) has a memory (38) in which each computing core (33, 34, 35) is provided with a memory area in which the input data relating to the modules are available for the computing core, wherein a plurality of computing cores (33, 34, 35) preferably share a memory area.

12. Controller according to one of Claims 8 to 11,
wherein, in an initialization phase, a computing core is designed to capture the independently controllable modules of the technical process and to respectively assign the captured modules to a computing core according to at least one predefined criterion.

13. Controller according to one of Claims 8 to 12,
having a plurality of I/O units (31, 32) which are each designed to interchange data with the technical process via an assigned communication connection, wherein each I/O unit is assigned a computing core which is designed to provide the input and output data for the respectively assigned I/O unit.

14. Controller according to one of Claims 8 to 13,
wherein the controller (30) is designed to carry out motion control of the independently controllable modules.

15. Drive system having a number of drive elements as independently controllable modules and having a controller according to Claim 14, in particular having a plurality of motor modules (401-410) each having a travel path and a plurality of drive coils which are arranged along the travel path and can be independently energized, wherein the drive elements each have a magnet device in order to be moved by the drive coils,
wherein a number of motor modules from the plurality of motor modules are designed as feed modules (403, 410) for the plurality of motor modules, which are each connected to the controller (30) via a communication line, wherein an I/O unit of the controller, in particular, is designed to interchange data via a plurality of communication paths.

## Revendications

1. Procédé de commande d'un processus technique, lequel comprend une tâche de commande pour un certain nombre de modules qui peuvent être commandés de manière autonome, sur une commande, laquelle comprend un nombre n de noyaux de calcul (C1, C2, C3) utilisés dans le cadre de la tâche de commande et une synchronisation (Sync1, Sync2), le processus technique possédant avec la commande au moins une liaison de communication destinée à l'échange de données et les modules étant respectivement associés à un noyau de calcul (C1, C2, C3), **caractérisé en ce que** les étapes suivantes sont exécutées dans un cycle de commande (150) :
fourniture par la commande dans un premier intervalle de temps (Z1) de données d'entrée des modules, collectées par la commande par le biais de l'au moins une liaison de communication, pour le noyau de calcul respectivement associé, 1 à n noyaux de calcul étant utilisés pour la fourniture des données d'entrée, les noyaux de calcul parmi les 1 à n noyaux de calcul qui ne sont pas utilisés pour la fourniture des données d'entrée se déclarant auprès de la synchronisation et étant placés dans le mode d'attente, et les 1 à n noyaux de calcul qui sont utilisés pour la fourniture des données d'entrée se déclarant auprès de la synchronisation après avoir accompli la tâche attribuée, le noyau de calcul respectif étant placé dans le mode d'attente tant que chacun des n noyaux de calcul n'est pas déclaré auprès de la synchronisation ;
synchronisation (Sync1) des n noyaux de calcul dès que les n noyaux de calcul sont déclarés auprès de la synchronisation, tous les noyaux de calcul placés dans le mode d'attente étant de nouveau amenés dans le mode actif ;
traitement des données d'entrée des modules par le noyau de calcul respectif dans un deuxième intervalle de temps (Z2) en vue de générer des données de sortie pour les modules, les noyaux de calcul qui ne sont pas utilisés pour le traitement des données d'entrée des modules se déclarant auprès de la synchronisation et étant placés dans le mode d'attente, les noyaux de calcul qui sont utilisés pour le traitement des données d'entrée se déclarant auprès de la synchronisation après l'accomplissement de la tâche attribuée, le noyau de calcul respectif étant placé dans le mode d'attente tant que chacun des n noyaux de calcul n'est pas déclaré auprès de la synchronisation ;
synchronisation (Sync2) des n noyaux de calcul dès que les n noyaux de calcul sont déclarés auprès de la synchronisation, tous les noyaux de calcul placés dans le mode d'attente étant de nouveau amenés dans le mode actif ; et
fourniture par la commande dans un troisième intervalle de temps (Z3) des données de sortie pour les modules par la commande en vue de délivrer les données de sortie pour les modules sur l'au moins une liaison de communication, 1 à n noyaux de calcul étant utilisés pour la fourniture des données de sortie, les noyaux de calcul parmi les 1 à n noyaux de calcul qui ne sont pas utilisés pour la fourniture des données de sortie se déclarant auprès de la synchronisation et étant placés dans le mode d'attente, et les 1 à n noyaux de calcul qui sont utilisés pour la fourniture des données de sortie se déclarant auprès de la synchronisation après avoir accompli la tâche attribuée, le noyau de calcul respectif étant placé dans le mode d'attente tant que chacun des n noyaux de calcul n'est pas déclaré auprès de la synchronisation.

2. Procédé selon la revendication 1, au moins l'une des étapes de fourniture des données d'entrée, de traitement des données d'entrée en les données de sortie et de fourniture des données de sortie étant divisée en au moins deux portions auxquelles est respectivement associée au moins une tâche, les noyaux de calcul utilisés dans les au moins deux portions étant synchronisés par la synchronisation (SyncA, SyncB, Synca) entre les deux portions en ce que dès que les noyaux de calcul utilisés dans les au moins deux portions sont déclarés auprès de la synchronisation, tous les noyaux de calcul qui sont placés dans le mode d'attente sont de nouveau amenés dans le mode actif.

3. Procédé selon la revendication 1 ou 2, la synchronisation étant réalisée sous la forme d'un ou plusieurs composants autonomes ou étant exécutée sur un ou plusieurs noyaux de calcul en tant de partie constitutive du programme de la tâche de commande.

4. Procédé selon l'une des revendications 1 à 3, les données d'entrée des modules étant respectivement mises à disposition du noyau de calcul respectivement associé dans une zone de mémoire associée, plusieurs noyaux de calcul partageant de préférence une zone de mémoire.

5. Procédé selon l'une des revendications 1 à 4, selon lequel, dans une phase d'initialisation, un noyau de calcul détecte les modules qui peuvent être commandés de manière autonome du processus technique et affecte les modules détectés respectivement à un noyau de calcul selon au moins un critère prédéfini, les modules qui peuvent être commandés de manière autonome et qui possèdent des exigences de sécurité particulières étant notamment distribués sur différents noyaux de calcul.

6. Procédé selon l'une des revendications 1 à 5, le processus technique avec la commande possédant une pluralité de liaisons de communication pour l'échange de données, la fourniture des données d'entrée lues par le biais de la liaison de communication respective et la fourniture des données de sortie à délivrer par le biais de la liaison de communication respective s'effectuant par un noyau de calcul associé à l'une des liaisons de communication.

7. Procédé selon l'une des revendications 1 à 6, le processus technique comprenant une commande de mouvement des modules qui peuvent être commandés de manière autonome.

8. Commande pour un processus technique, qui comprend une tâche de commande pour un certain nombre de modules qui peuvent être commandés de manière autonome, comprenant
un nombre n de noyaux de calcul (33, 34, 35) utilisés dans le cadre de la tâche de commande, les modules étant respectivement associés à un noyau de calcul,
au moins une unité d'E/S (31, 32) qui est conçue pour échanger des données avec le processus technique par le biais d'une liaison de communication, et
une synchronisation (Sync1, Sync2),
**caractérisée en ce que**
la commande (30) est conçue pour fournir dans un premier intervalle de temps (Z1) des données d'entrée des modules, collectées par le biais du module d'E/S, au noyau de calcul respectivement associé, et pour synchroniser les noyaux de calcul auxquels sont associés des modules lorsque les données d'entrée sont prêtes, 1 à n noyaux de calcul étant utilisés pour la fourniture des données d'entrée, les noyaux de calcul parmi les 1 à n noyaux de calcul qui ne sont pas utilisés pour la fourniture des données d'entrée se déclarant auprès de la synchronisation et étant placés dans le mode d'attente, et les 1 à n noyaux de calcul qui sont utilisés pour la fourniture des données d'entrée se déclarant auprès de la synchronisation après avoir accompli la tâche attribuée, le noyau de calcul respectif étant placé dans le mode d'attente tant que chacun des n noyaux de calcul n'est pas déclaré auprès de la synchronisation, et en vue de la synchronisation (Sync1) des n noyaux de calcul, dès que les n noyaux de calcul sont déclarés auprès de la synchronisation, tous les noyaux de calcul placés dans le mode d'attente étant de nouveau amenés dans le mode actif ;
les noyaux de calcul étant conçus pour, après la synchronisation, traiter les données d'entrée associées des modules dans un deuxième intervalle de temps (Z2) en vue de générer des données de sortie pour les modules, chaque noyau de calcul signalant la fin du traitement, les noyaux de calcul qui ne sont pas utilisés pour le traitement des données d'entrée des modules se déclarant auprès de la synchronisation et étant placés dans le mode d'attente, les noyaux de calcul qui sont utilisés pour le traitement des données d'entrée se déclarant auprès de la synchronisation après l'accomplissement de la tâche attribuée, le noyau de calcul respectif étant placé dans le mode d'attente tant que chacun des n noyaux de calcul n'est pas déclaré auprès de la synchronisation, et la commande étant conçue pour, lorsque tous les noyaux de calcul ont signalé la fin du traitement, fournir dans un troisième intervalle de temps (Z3) les données de sortie pour les modules en vue de délivrer les données de sortie par le biais du module d'E/S sur la liaison de communication, 1 à n noyaux de calcul étant utilisés pour la fourniture des données de sortie, les noyaux de calcul parmi les 1 à n noyaux de calcul qui ne sont pas utilisés pour la fourniture des données de sortie se déclarant auprès de la synchronisation et étant placés dans le mode d'attente, et les 1 à n noyaux de calcul qui sont utilisés pour la fourniture des données de sortie se déclarant auprès de la synchronisation après avoir accompli la tâche attribuée, le noyau de calcul respectif étant placé dans le mode d'attente tant que chacun des n noyaux de calcul n'est pas déclaré auprès de la synchronisation.

9. Commande selon la revendication 8, la commande (30) étant conçue pour diviser au moins l'une des opérations de fourniture des données d'entrée, de traitement des données d'entrée en les données de sortie et de fourniture des données de sortie en au moins deux portions auxquelles est respectivement associée une tâche, une opération de synchronisation entre les deux portions étant exécutée par les noyaux de calcul utilisés dans les au moins deux portions par la synchronisation (SyncA, SyncB, Synca) en ce que dès que les noyaux de calcul utilisés dans les au moins deux portions sont déclarés auprès de la synchronisation, tous les noyaux de calcul qui sont placés dans le mode d'attente sont de nouveau amenés dans le mode actif.

10. Commande selon la revendication 8 ou 9, la synchronisation étant réalisée sous la forme d'un ou plusieurs composants autonomes ou étant exécutée sur un ou plusieurs noyaux de calcul en tant de partie constitutive du programme de la tâche de commande.

11. Commande selon l'une des revendications 8 à 10, la commande (30) possédant une mémoire (38) dans laquelle une zone de mémoire est mise à disposition de chaque noyau de calcul (33, 34, 35), dans laquelle se tiennent prêtes les données d'entrée des modules, plusieurs noyaux de calcul (33, 34, 35) partageant de préférence une zone de mémoire.

12. Commande selon l'une des revendications 8 à 11, un noyau de calcul étant conçu pour, dans une phase d'initialisation, détecter les modules qui peuvent être commandés de manière autonome du processus technique et affecter les modules détectés respectivement à un noyau de calcul selon au moins un critère prédéfini.

13. Commande selon l'une des revendications 8 à 12, comprenant une pluralité d'unités d'E/S (31, 32) qui sont respectivement conçues pour échanger des données avec le processus technique par le biais d'une liaison de communication associée, un noyau de calcul étant associé à chaque unité d'E/S, lequel est conçu pour exécuter la fourniture des données d'entrée lues et de sortie pour l'unité d'E/S respectivement associée.

14. Commande selon l'une des revendications 8 à 13, la commande (30) étant conçue pour exécuter une commande de mouvement des modules qui peuvent être commandés de manière autonome.

15. Système d'entraînement comprenant un certain nombre d'éléments d'entraînement sous la forme de modules qui peuvent être commandés de manière autonome et une commande selon la revendication 14, comprenant notamment une pluralité de modules moteurs (401 - 410) qui possèdent respectivement une course de déplacement et une pluralité de bobines d'entraînement qui peuvent être alimentées de manière autonome disposées le long de la course de déplacement, les éléments d'entraînement possédant respectivement un dispositif magnétique en vue d'être déplacé par les bobines d'entraînement,
un certain nombre de modules moteurs parmi la pluralité de modules moteurs étant conçus sous la forme de modules d'alimentation (403, 410) pour la pluralité de modules moteurs, lesquels sont respectivement connectés à la commande (30) par le biais d'une ligne de communication, une unité d'E/S de la commande étant notamment conçue pour échanger des données par le biais de plusieurs voies de communication.
